Europäisches Patentamt

(19) European Patent Office

Office européen des brevets

(11) EP 0 753 802 A1

(12) EUROPEAN PATENT APPLICATION
published in accordance with Art. 158(3) EPC

(43) Date of publication:
15.01.1997 Bulletin 1997/03

(51) Int. Cl.$^6$: G05B 11/32

(86) International application number:
PCT/JP95/00612

(21) Application number: 95913388.5

(22) Date of filing: 30.03.1995

(87) International publication number:
WO 95/27235 (12.10.1995 Gazette 1995/43)

(84) Designated Contracting States:
DE FR GB IT

(30) Priority: 31.03.1994 JP 837949/94

(71) Applicant: OMRON CORPORATION
Kyoto-shi, Kyoto 616 (JP)

(72) Inventors:
• EGI, Mamoru
Omron Corporation
Kyoto 616 (JP)

• INAGE, Katuyuki
Omron Corporation
Kyoto 616 (JP)

(74) Representative: Wilhelms, Rolf E., Dr.
WILHELMS, KILIAN & PARTNER
Patentanwälte
Eduard-Schmid-Strasse 2
81541 München (DE)

(54) CONTROL SYSTEM AND METHOD

(57) Normalized measured temperatures are calculated, these being obtained by normalizing measured temperatures, which have been measured by temperature sensors provided so as to correspond to a plurality of heaters, by reference target temperatures. A reference value is calculated based upon these normalized measured temperatures. Reference-value deviations between the reference value and normalized measured temperatures are calculated, and deviation differential values, which are obtained by differentiating these reference-value deviations with respect to time, are calculated. Correction gains are calculated based upon the reference-value deviations and deviation differential values. Normalized deviations are calculated, these being obtained by normalizing deviations between respective reference target temperatures and measured temperatures by the reference target temperatures. Degrees of settling are calculated based upon these normalized deviations. Correction quantities are calculated based upon the respective correction gains and degrees of settling. Respective target temperatures are calculated by correcting the reference target temperatures using the correction quantities.

Fig. 4

EP 0 753 802 A1

## Description

Technical Field

This invention relates to a control system and method for controlling a plurality of actuators of controlled objects by a controller on the basis of signals from a plurality of sensors, wherein the controlled objects are controlled so as to make a stable transition from a certain state (e.g., an initial state) to another state (e.g., a target state). Such control may be classified broadly into the following two types of control:

One is control in which the controlled object is caused to make the stable transition to the target state by correcting a target value, which represents the target state, to be applied to the controller.

The other is control in which, in order that the controlled object may be controlled so as to make the transition from the initial state to the target state, a secondary target value to be applied to the controller and representing the path of the transition is corrected, thereby causing the controlled object to make the stable transition to the target state.

Background Art

A temperature control system is an example of a control system which corrects a target value to be applied to a controller and representing a target state.

In a temperature control system for controlling a tunnel-type heating oven used in a conveyor furnace or pusher furnace, etc., or a heater plate used in a resin molding machine, etc., the heating oven and heater plate, etc., are divided into a plurality of areas (wherein typical locations in these areas are referred to as "heating points"), a heater is provided for each area and temperature control is performed independently area by area in such a manner that each heating point will attain a desired target temperature. Often a target temperature is set for each individual area in dependence upon the article heated, the article molded, etc..

In such a temperature control system, the temperature of each area is influenced (interfered with) by the neighboring areas. As a result, it is often difficult to control the temperature in such a manner that each area will attain its target temperature.

For example, there are instances where the temperature of each area overshoots owing to the influence (interference) of heat produced by neighboring heaters. In particular, once overshoot develops in a tunnel-type heating oven, a steady-state error remains and it takes time for the temperature inside the heating oven to be restored to the target temperature. In other words, the settling time is prolonged.

Temperature control apparatuses which prevent such interference are described in the specifications of Japanese Patent Application Laid-Open No. 59-35212, Japanese Patent Application Laid-Open No. 61-145606 and Japanese Patent Application Laid-Open No. 61-156316. These temperature control apparatuses attempt to create a model of the interference between heating points, decide a manipulated variable using the model and prevent the interference.

However, in order to create a model of the interference between heating points in a temperature control apparatus of this kind, the temperature of each heating point is measured and the parameters of a transfer function are calculated using the temperature measured. If there is an increase in the number of heating points, it takes time to calculate the parameters of the transfer function representing the model.

Further, the creation of the model must be performed for every object to be controlled in the heating oven or molding machine, etc.. This makes the operation troublesome. Since there are cases where even controlled objects of identical type have individually different capabilities, modeling must be carried out for each controlled object.

A position control system in a crane or the like is an example of a control system in which the controller is provided with a secondary target value representing the path of a transition in order that the controlled object may be controlled so as to make the transition from the initial state to the final target state.

When a suspended load is carried from an initial position to a target position in the position control system of an overhead traveling crane according to the prior art, a main girder or main beam and trolley are moved independently of each other in accordance with predetermined velocity patterns. The velocity pattern is a pattern which produces acceleration, constant velocity or deceleration so as to make swinging of the suspended load as small as possible.

In such a conventional position control system, however, the velocity patterns of the main girder and trolley are the same. Consequently, if the traveling distances of the main girder and trolley differ, e.g., if the traveling distance of the main girder is greater than that of the trolley, the trolley will arrive at its stopping position first and then the main girder will arrive at its stopping position. Accordingly, since the main girder will still be moving when the trolley arrives at its stopping position, the traveling direction (motion vector) of the suspended load changes. The suspended load develops a Coriolis force owing to the change in traveling direction, and the Coriolis force in turn causes the suspended load to swing more.

As a consequence, even when the main girder and trolley have reached their stopping positions (target positions), the suspended load cannot be lowered until the swinging of the suspended load diminishes. Further, owing to the pronounced swinging of the suspended load, a large safety zone is required outside the work area.

Even if the main girder and trolley are made to move in accordance with a velocity pattern that causes them to arrive at their stopping positions simultaneously, the driving wheels of the main girder or trolley may slip.

When this occurs, the main girder and trolley cannot reach their stopping positions at the same time because such slipping has not been taken into account. Hence, the suspended load develops a large amount of swing owing to the Coriolis force, as mentioned above.

Disclosure of the Invention

An object of the present invention is to control a controlled object in such a manner that the controlled object will make a stable transition from a certain state (an initial state) to another state (e.g., a target state).

A first aspect of the present invention provides a control system and method for causing a controlled object to make a stable transition to a target state by correcting a target value, that is to be applied to a controller, which represents the final target state.

An actuator is a heater, an electromagnet, a light-emitting device (such as an LED or LD), etc.. In a case where the actuator is a heater, a temperature sensor is used as a sensor and control is performed in such a manner that the spatial distribution of temperature becomes a predetermined temperature pattern. In a case where the actuator is an electromagnet, a magnetic sensor using a Hall device is used as the sensor and control is performed in such a manner that the spatial distribution of flux density becomes a predetermined flux pattern. In a case where the actuator is a light-emitting device, an image sensing device such as a CCD camera or a light-receiving element is used as the sensor and control is performed in such a manner that the spatial distribution of illumination becomes a predetermined illumination pattern.

A control system according to the first aspect of the invention comprises a plurality of spatially existing heaters, a plurality of temperature sensors provided so as to correspond to respective ones of the plurality of heaters for measuring the temperatures of controlled objects, a target temperature generating unit for generating a revised target temperature for each heater based upon a given final target temperature, and a controller for calculating manipulated variables in such a manner that the measured temperatures measured by the plurality of temperature sensors will approach respective ones of the revised target temperatures generated by the target temperature generating unit, and applying these manipulated variables to respective ones of the plurality of heaters; wherein the target temperature generating unit has reference-value deviation calculating means for calculating normalized measured temperatures obtained by normalizing the measured temperatures, which have been measured by the plurality of temperature sensors, by respective ones of corresponding final target temperatures, deciding a reference value based upon these normalized measured temperatures, and calculating reference-value deviations between each normalized measured temperature and the reference value; deviation differential-value calculating means for differentiating, with respect to time, the reference-value deviations calculated by the reference-value deviation calculating means, thereby calculating respective deviation differential values; correction gain calculating means for calculating respective correction gains, in such a manner that all normalized measured temperatures take on the same value, based upon the reference-value deviations calculated by the reference-value deviation calculating means and the deviation differential values calculated by the deviation differential-value calculating means; normalized deviation calculating means for calculating respective normalized deviations obtained by normalizing, by the final target temperatures, deviations between the measured temperatures measured by the plurality of temperature sensors and respective ones of the corresponding final target temperatures; settling degree calculating means for calculating respective degrees of settling based upon the normalized deviations calculated by the normalized deviation calculating means; correction quantity calculating means for calculating respective correction quantities based upon the correction gains calculated by the correction gain calculating means, the degrees of settling calculated by the settling degree calculating means, a predetermined start-up gain and a predetermined settling gain; and target temperature calculating means for calculating respective ones of the revised target temperatures by revising the final target temperatures using the correction quantities calculated by the correction quantity calculating means.

A control method according to the first aspect of the invention comprises providing a plurality of spatially existing heaters, a plurality of temperature sensors provided so as to correspond to respective ones of the plurality of heaters for measuring the temperature of controlled objects, and a controller for calculating manipulated variables in such a manner that the measured temperatures measured by the plurality of temperature sensors will approach respective ones of given revised target temperatures, and applying these manipulated variables to respective ones of the plurality of heaters; calculating normalized measured temperatures obtained by normalizing the measured temperatures, which have been measured by the plurality of temperature sensors, by respective ones of corresponding final target temperatures, deciding a reference value based upon these normalized measured temperatures and calculating reference-value deviations between each normalized measured temperature and the reference value; differentiating, with respect to time, the calculated reference-value deviations, thereby calculating respective deviation differential values; calculating respective correction gains in such a manner that all normalized measured temperatures take on the same value based upon the calculated reference-value deviations and the calculated deviation differential values; calculating respective normalized deviations obtained by normalizing, by the final target temperatures, deviations between the measured temperatures measured by the plurality of temperature sensors and respective ones of the corresponding final target temperatures;

calculating respective degrees of settling based upon the calculated normalized deviations; calculating respective correction quantities based upon the calculated correction gains, the calculated degrees of settling, a predetermined start-up gain and a predetermined settling gain; and calculating respective ones of the revised target temperatures by revising the final target temperatures using the calculated correction quantities.

In accordance with the first aspect of the invention, measured temperatures that have been measured by a plurality of temperature sensors are each normalized by respective ones of corresponding given final target temperatures. Normalized measured temperatures are thus calculated. A normalized measured temperature represents to what extent the temperature of the controlled object has attained the target (the final target temperature). In other words, a normalized measured temperature represents the degree of response. The closer a normalized measured temperature is to unity, the closer the temperature of the controlled object is to the target temperature. Since measured temperature is normalized by final target temperature, a pattern in which final target temperatures are not spatially uniform and take on different values can be set. Examples of such a pattern are one in which the spatial distribution of temperature is random, one that is suited to machining of a workpiece, one that has a constant slope, one that is step-shaped, etc..

A reference value is decided on the basis of these normalized measured temperatures. By way of example, the reference value is a mean value of all normalized measured temperatures in the transient state and is unity in the steady state. The transient state refers to a time when all normalized measured temperatures are 1 or less, and the steady state refers to a time when any one normalized measured temperature exceeds 1.

Reference-value deviations between each normalized measured temperature and the reference value are calculated. In the case where the reference value is the mean value of normalized measured temperatures, for example, a reference-value deviation indicates whether the response of temperature at another position is fast or slow with respect to the temperature at a position at which the controlled object exhibits a mean response.

The reference-value deviations are each differentiated with respect to time to calculate deviation differential values. A deviation differential value indicates whether a reference-value deviation shows a decreasing tendency or an increasing tendency. That is, the deviation differential value indicates whether the response of temperature at the particular position is inclined to become even faster or slower or whether it is becoming the same as the response of temperature at another position.

Each correction gain is calculated, based upon each reference-value deviation and its deviation differential value, in such a manner that all normalized measured temperatures take on the same value. By way of example, if a reference-value deviation is a large positive value, correction gain is set to a large negative value. If a reference-value deviation is a large positive value and its reference-value deviation is a large positive value, then the correction gain is set to a large value. On the other hand, when a reference-value deviation and the deviation differential value are both substantially equal to 0, correction gain also becomes a value substantially equal to 0.

The deviations between the measured temperatures measured by the plurality of temperature sensors and the respective final target temperatures corresponding to these measured temperatures are normalized by the final target temperatures. Normalized deviations are thus calculated.

Respective degrees of settling are calculated based on the normalized deviations. The degree of settling indicates whether the respective measured temperature is temperature at start-up time or a temperature that has settled. The closer the normalized deviation is to unity, the more the degree of settling indicates that the measured temperature has settled. The farther the normalized deviation is from unity, the more the setting indicates that the measured temperature is temperature at start-up.

Respective correction quantities are calculated based upon the correction gains, degrees of settling, start-up gain and settling gain. A start-up gain is a gain for revising a correction gain at start-up time. Settling gain is a gain for revising correction gain at settling time. The start-up gain or settling gain is used depending upon the degree of settling, correction gain is revised by these gains and the correction quantity is calculated.

Revised target temperatures are calculated by revising the final target temperatures using the correction quantities. When a final temperature deviation is positive and large, the revised target temperature is set to be lower than the final target temperature. When a reference temperature deviation is negative and large, the revised target temperature is set to be higher than the final target temperature. Accordingly, a revised target temperature is set to be small to slow down the speed of response with regard to a reference-value deviation that is positive and large (for which the speed of response is high), and a revised target temperature is set to be large to raise the speed of response with regard to a reference-value deviation that is positive and large (for which the speed of response is low). In other words, it is so arranged that the rates at which the responses of the respective measured temperatures approach the corresponding final target temperatures become the same in control space.

The revised target temperatures thus calculated are applied to the controller.

Accordingly, revised target temperatures are produced in such a manner that the response rates of the temperatures at respective positions become identical. This means that the rate of change in temperature is uniform even if there is influence (interference) from neighboring heaters. As a result, overshoot due to mutual interference no longer occurs. In particular, in the case of a tunnel-type furnace, settling time can be shortened by performing control in such a manner that overshoot will not occur.

Since the response rates of the normalized measured temperatures take on the same value, it is no longer necessary to perform modeling for every controlled object of a tunnel-type heating furnace or heater, as in the prior art. A variety of controlled objects can be dealt with by the same control.

A control system that generalizes the first aspect of the present invention is a control system having a plurality of spatially existing actuators for driving controlled objects, a plurality of sensors provided so as to correspond to respective ones of the plurality of actuators for measuring controlled variables of the controlled objects, and a controller for calculating manipulated variables in such a manner that the controlled variables measured by the plurality of sensors will approach respective ones of given target values, and applying these manipulated variables to respective ones of the plurality of actuators, characterized by having a target value generating unit for calculating normalized controlled variables obtained by normalizing the controlled variables, which have been measured by the plurality of sensors, by respective ones of given final target values, deciding a reference quantity based upon these normalized controlled variables, calculating reference-quantity deviations between each normalized controlled variable and the reference quantity, calculating respective ones of the target values by revising the final target values based upon the reference-quantity deviations in such a manner that all normalized controlled variables take on the same value, and applying these target values to the controller.

A control method that generalizes the first aspect of the invention comprises providing a plurality of spatially existing actuators for driving controlled objects, a plurality of sensors provided so as to correspond to respective ones of the plurality of actuators for measuring controlled variables of the controlled objects, and a controller for calculating manipulated variables in such a manner that the controlled variables measured by the plurality of sensors will approach respective ones of given target values, and applying these manipulated variables to respective ones of the plurality of actuators; calculating normalized controlled variables obtained by normalizing the controlled variables, which have been measured by the plurality of sensors, by respective ones of given final target values, deciding a reference quantity based upon these normalized controlled variables, calculating reference-quantity deviations between each normalized controlled variable and the reference quantity, calculating respective ones of the target values by revising the final target values based upon the reference-quantity deviations in such a manner that all normalized controlled variables take on the same value, and applying these target values to the controller.

In an embodiment of the first aspect of the invention, the actuators are heaters and the sensors are temperature sensors.

In accordance with the first aspect of the invention, controlled variables that have been measured by a plurality of sensors are each normalized by respective ones of corresponding given final target temperatures. Normalized controlled variables are thus calculated. A normalized controlled variable represents to what extent the controlled variable has attained the target. In other words, a normalized controlled variable represents the degree of response. The closer a normalized controlled variable is to unity, the closer the controlled variable is to the target. Since a controlled variable is normalized by the final target value, a pattern in which final target values are not uniform and take on different values can be set. Examples of such a pattern are one in which the spatial distribution of final target values is random, one that has a constant slope, one that is step-shaped, etc..

A reference quantity is decided on the basis of these normalized controlled variables. By way of example, the reference quantity is a mean value of all normalized controlled variables in the transient state and is unity in the steady state. The transient state refers to a time when all normalized controlled variables are 1 or less, and the steady state refers to a time when any one normalized controlled variable exceeds 1.

Reference-quantity deviations between each normalized measured temperature and the reference value are calculated. In the case where the reference quantity is the mean value of normalized controlled variables, for example, a reference-quantity deviation indicates whether the response of a controlled variable at another position is fast or slow with respect to the a controlled variable at a position at which the controlled object exhibits a mean response.

On the basis of these reference-quantity deviations, target values are calculated by revising the final target values in such a manner that all normalized controlled variables take on the same value, i.e., in such a manner that the rates at which the responses of the respective controlled variables approach the corresponding final target values become the same in control space. The larger a reference-quantity deviation is in the positive direction, the smaller the target value is set with respect to the final target value. The larger a reference-quantity deviation is in the negative direction, the larger the target value is set with respect to the final target value. As a result, a target value is set to be small to slow down the speed of response with regard to a controlled variable whose speed of response is high, and a target value is set to be large to raise the speed of response with regard to a controlled variable whose speed of response is low.

Accordingly, target values are produced in such a manner that the response rates relating to the respective controlled variables become identical. This means that the rate of change in a controlled variable is uniform even if there is influence (interference) from neighboring actuators. As a result, overshooting or undershooting of controlled variables due to mutual interference no longer occurs. Accordingly, settling time can be shortened by so arranging it that overshoot or undershoot will not occur.

Since the target values are calculated in such a manner that the response rates of the controlled variables take on the same value, it is no longer necessary to perform modeling for every controlled object, as in the prior art. A variety of controlled objects can be dealt with by the same control.

The target value generating unit is implemented by reference-quantity deviation calculating means for calculating the normalized controlled variables obtained by normalizing the controlled variables, which have been measured by the plurality of sensors, by respective ones of corresponding final target values, deciding the reference quantity based upon these normalized controlled variables, and calculating the reference-quantity deviations between each normalized controlled variable and the reference quantity, and target value calculating means for calculating respective ones of the target values by revising the final target values, in such a manner that all normalized controlled variables take on the same value, based upon the reference-quantity deviations calculated by the reference-quantity deviation calculating means.

In an embodiment of the first aspect of the invention, the target value generating unit is provided with deviation differential-value calculating means for differentiating, with respect to time, the reference-quantity deviations calculated by the reference-quantity deviation calculating means, thereby calculating respective deviation differential values, and the target value calculating means calculates respective ones of the target values, in such a manner that all normalized controlled variables take on the same value, based upon the reference-quantity deviations calculated by the reference-quantity deviation calculating means and the deviation differential values calculated by the deviation differential-value calculating means.

In accordance with this embodiment, deviation differential values are calculated by differentiating each of the reference-quantity deviations with respect to time. A deviation differential value indicates whether the deviation of a normalized controlled variable with respect the reference quantity shows a decreasing tendency or an increasing tendency. That is, the deviation differential value indicates whether the response rate at the particular position is inclined to become even faster or slower or whether it is becoming the same as the response rate at another position.

The respective target values are calculated using the reference-quantity deviations as well as the deviation differential values thereof. If a deviation differential value is positive, then the target value is set to be smaller. If a deviation differential value is negative, then the target value is set to be larger.

The target values thus calculated are applied to the controller.

Accordingly, since deviation differential values are taken into account in addition to reference-quantity deviations, target values can be calculated more accurately.

In a preferred embodiment of the first aspect of the invention, the target value generating unit is further provided with correction gain calculating means for calculating respective correction gains based upon the reference-quantity deviations calculated by the reference-quantity deviation calculating means and the deviation differential values calculated by the deviation differential-value calculating means; normalized deviation calculating means for calculating respective normalized deviations obtained by normalizing, by the final target values, deviations between the measured controlled variables measured by the plurality of sensors and respective ones of the corresponding final target values; and settling degree calculating means for calculating respective degrees of settling based upon the normalized deviations calculated by the normalized deviation calculating means; the target value calculating means calculating respective ones of the target values by revising the final target values, in such manner that all normalized controlled variables take on the same value, based upon the correction gains calculated by the correction gain calculating means and the degrees of settling calculated by the settling degree calculating means.

In accordance with this embodiment, each correction gain is calculated, based upon each reference-value deviation and its deviation differential value, in such a manner that all normalized controlled variables take on the same value. By way of example, if a reference-value deviation is a large positive value, correction gain is set to a large negative value. If a reference-value deviation is a positive large value and its reference-value deviation is a large positive value, then the correction gain is set to a large value. On the other hand, when a reference-value deviation and the deviation differential value are both substantially equal to 0, correction gain also becomes a value substantially equal to 0.

The deviations between the measured controlled variables measured by the plurality of sensors and the respective final target temperatures corresponding to these measured controlled variables are normalized by the final target temperatures. Normalized deviations are thus calculated. Respective degrees of settling are calculated based on the normalized deviations. The degree of settling indicates whether the respective controlled variable is a controlled variable at start-up (the transient state) or a controlled variable that has settled (the steady state). The closer the normalized deviation is to unity, the more the degree of settling indicates that the controlled variable has settled. The farther the normalized deviation is from unity, the more the degree of settling indicates that the controlled variable is a controlled variable at start-up.

Correction gain is revised in dependence upon the value of the settling degree on the basis of the correction gain and degree of settling, and a target value is calculated based upon this revised correction gain.

The target values thus calculated are applied to the controller.

Accordingly, target values are calculated upon taking degrees of settling into account in addition to correction gains, which are based upon the reference-quantity deviations and deviation differential values. As a result, suitable target values can be calculated in dependence upon the transient state or steady state.

In another preferred embodiment of the first aspect of the invention, the target value generating unit is further provided with correction quantity calculating means for calculating respective correction quantities based upon the correction gains calculated by the correction gain calculating means, the degrees of settling calculated by the settling degree calculating means, a predetermined start-up gain and a predetermined settling gain, the target value calculating means calculating respective ones of the target values by revising the final target values using the correction quantities calculated by the correction quantity calculating means.

In accordance with this embodiment, the respective correction quantities are calculated based upon the correction gains, degrees of settling, start-up gain and settling gain. The start-up gain is a gain for revising a correction gain at start-up time. Settling gain is a gain for revising correction gain at settling time. The start-up gain or settling gain is used in dependence upon the degree of settling. As a result, correction quantities for which the correction gains have been revised are calculated.

Target values are calculated by revising the final target values using the correction quantities.

The target values thus calculated are applied to the controller.

Accordingly, a target value can be adjusted using a desired start-up gain or settling gain in dependence upon whether the currently prevailing state is start-up time or settling time.

A second aspect of the present invention is to cause a controlled object to make a stable transition to a target state by revising a secondary target value, to be applied to a controller, that represents the path of a transition from an initial state to a target state.

The second aspect of the invention is applied to position control, attitude control, etc.. Motors or other drive units are the actuators and position sensors, velocity sensors, etc., are used as the sensors.

A control system according to the second aspect of the invention comprises a plurality of drive units for driving controlled objects, a plurality of position sensors provided so as to correspond to respective ones of the plurality of drive units for measuring the positions of the controlled objects, a command velocity generating unit for generating a revised command velocity for each drive unit based upon a given final target position and a predetermined command velocity, and a controller for calculating manipulated variables in such a manner that velocities derived based upon the positions measured by the plurality of position sensors will become respective ones of the revised command velocities generated by the command velocity generating unit, and applying these manipulated variables to respective ones of the plurality of drive units, wherein the command velocity generating unit has maximum distance calculating means for calculating respective maximum distances prior to start of control or at start of control based upon initial positions measured by the plurality of position sensors and the final target positions; reference-value deviation calculating means for calculating normalized distances obtained by normalizing distances between the initial positions and measured positions measured by the plurality of position sensors by respective ones of corresponding maximum distances after start of control, deciding a reference value based upon these normalized distances, and calculating reference-value deviations between each normalized distance and the reference value; deviation differential-value calculating means for differentiating, with respect to time, the reference-value deviations calculated by the reference-value deviation calculating means, thereby calculating respective deviation differential values; correction gain calculating means for calculating respective correction gains, in such a manner that all normalized distances take on the same value, based upon the reference-value deviations calculated by the reference-value deviation calculating means and the deviation differential values calculated by the deviation differential-value calculating means; and command velocity calculating means for calculating the revised command velocities by revising the command velocities based upon the correction gains calculated by the correction gain calculating means.

A control method according to the second aspect of the invention comprises providing a plurality of drive units for driving controlled objects, a plurality of position sensors provided so as to correspond to respective ones of the plurality of drive units for measuring the positions of the controlled objects, and a controller for calculating manipulated variables in such a manner that velocities derived based upon the positions measured by the plurality of position sensors will become respective ones of given revised command velocities, and applying these manipulated variables to respective ones of the plurality of drive units; calculating respective maximum distances prior to start of control or at start of control based upon initial positions measured by the plurality of position sensors and final target positions; calculating normalized distances obtained by normalizing distances between the initial positions and measured positions measured by the plurality of position sensors by respective ones of corresponding maximum distances after start of control, deciding a reference value based upon these normalized distances and calculating reference-value deviations between each normalized distance and the reference value; differentiating, with respect to time, the calculated reference-value deviations, thereby calculating respective deviation differential values; calculating respective correction gains, in such a manner that all normalized distances take on the same value, based upon the calculated reference-value deviations and the calculated deviation differential values; and calculating the revised command velocities by revising the command velocities based upon the calculated correction gains.

Maximum distances between initial positions measured by a plurality of position sensors and given target values are calculated prior to start of control or at start of control.

Normalized distances, which are obtained by normalizing distances between the initial positions and measured positions measured by the plurality of position sensors by respective ones of the maximum distances, are calculated after the start of control. Since the maximum distances traveled by the drive units are each different, the distances traveled from the initial positions are normalized by the maximum distances. As a result, a normalized distance will indicate to what extent the controlled object has reached the target position.

A reference value is decided on the basis of these normalized distances. By way of example, the reference value is a normalized distance that corresponds to the drive unit for which the maximum distance is largest. The reason for this is that the drive unit whose traveling distance is largest will have the longest traveling time and the lowest speed of response.

Reference-value deviations between each normalized distance and the reference value are calculated. The reference-value deviation is a deviation with respect to the reference value (the normalized distance for which the maximum distance is largest) and indicates how fast the controlled object is moving from this reference point.

The reference-value deviations are differentiated with respect to time to calculate deviation differential values. A deviation differential value indicates whether a reference-value deviation shows an increasing tendency or a decreasing tendency.

Each correction gain is calculated, based upon each reference-value deviation and its deviation differential value, in such a manner that all normalized distances take on the same value. If a reference-value deviation is a large positive value, correction gain is set to be large. If a reference-value deviation also is a large positive value, correction gain is set to be larger.

Respective revised command velocities are calculated by revising given command velocities based upon correction gains. By way of example, the given command velocity is a velocity pattern which produces acceleration, constant velocity or deceleration.

The command velocities thus calculated are applied to a controller.

Accordingly, since command velocities are generated in such a manner that the normalized distances take on the same value, the controlled object can be moved stably.

Even if a disturbance develops in one drive unit, e.g., even if the drive wheels of a drive unit slip, the normalized distances will all have the same value and therefore command velocities will be generated that lower the traveling velocities of the other drive units in dependence upon slip, with the result being that the controlled object can be controlled stably even in a case where such slip develops.

A control system that stipulates the second aspect of the present invention in general terms is a control system having a plurality of actuators for driving controlled objects, a plurality of first and second sensors provided so as to correspond to respective ones of the plurality of actuators for measuring first and second controlled variables of the controlled objects, a secondary target value generating unit for generating, for each actuator, a revised secondary target value to be applied to a controller in order to so arrange it that the first controlled variables measured by the first sensors will attain given final target values, and a controller for calculating manipulated variables in such a manner that the second controlled variables measured by the plurality of second sensors will approach respective ones of revised secondary target values generated by the secondary target value generating unit, and applying these manipulated variables to respective ones of the plurality of actuators, the secondary target value generating unit calculating respective maximum amounts of change prior to start of control or at start of control based upon initial values measured by the plurality of first sensors and the final target values, calculating normalized amounts of change obtained by normalizing amounts of change between the initial values and the first controlled variables measured by the plurality of first sensors by respective ones of corresponding maximum amounts of change after start of control, deciding a reference quantity based upon these normalized amounts of change, calculating reference-quantity deviations between each normalized amount of change and the reference quantity, and generating the revised secondary target values by revising the secondary target values based upon each of the reference-quantity deviation values in such a manner that all normalized amounts of change take on the same value.

A control method that stipulates the second aspect of the invention in general terms comprises providing a plurality of actuators for driving controlled objects, a plurality of first and second sensors provided so as to correspond to respective ones of the plurality of actuators for measuring first and second controlled variables of the controlled objects, and a controller for calculating manipulated variables in such a manner that the second controlled variables measured by the plurality of second sensors will approach respective ones of given revised secondary target values and applying these manipulated variables to respective ones of the plurality of actuators, calculating respective maximum amounts of change prior to start of control or at start of control based upon initial values measured by the plurality of first sensors and the final target values, calculating normalized amounts of change obtained by normalizing amounts of change between the initial values and the first controlled variables measured by the plurality of first sensors by respective ones of corresponding maximum amounts of change after start of control, deciding a reference quantity based upon these normalized amounts of change, calculating reference-quantity deviations between each normalized amount of change and the reference quantity, and generating the revised secondary target values by revising the secondary target values based upon each of the reference-quantity deviation values in such a manner that all normalized amounts of change take on the same value.

In an embodiment of the second aspect of the invention, the first sensors and second sensors are the same and the first controlled variables are calculated based upon the first controlled variables.

The actuators are drive units and the first sensors are position sensors.

The first controlled variables are positions and the second controlled variables are velocities.

Maximum amounts of change are calculated based upon initial values, measured by the plurality of first sensors, and the final target values prior to start of control or at start of control.

After the start of control, amounts of change between the initial values and the first controlled variables measured by the plurality of first sensors are each normalized by respective ones of corresponding maximum amounts of change. Normalized amounts of change are thus calculated. By normalizing an amount of change in a controlled variable from an initial value by a maximum amount of change, the normalized amount of change will indicate to what extent the controlled object has reached the target.

A reference quantity is decided on the basis of these normalized amounts of change. By way of example, the reference quantity is a normalized amount of change for which the maximum amount of change is largest. The reason for this is that the normalized amount of change whose maximum amount of change is largest will have the slowest response for the controlled variable and the lowest speed of response with respect to the target. In a case where actuator performances differ, these performances are taken into account as well.

Reference-quantity deviations between each normalized amount of change and the reference quantity are calculated. The reference-quantity deviation indicates how fast or how slow the response is to the reference value (the normalized amount of change whose maximum amount of change is largest).

Respective revised secondary target values are calculated by revising secondary target values based upon each of the reference-quantity deviations in such a manner that all normalized amounts of change take on the same value. In a case where a reference-quantity deviation is large and positive, a revised secondary target value is set to be small. In a case where a reference-quantity deviation is large and negative, a revised secondary target value is set to be large. A secondary target value is a constant value or a value having a predetermined pattern.

The revised secondary target values thus calculated are applied to a controller.

Accordingly, even if a disturbance has developed in any of the plurality of actuators by the time the target state (final target value) is reached starting from the initial state (initial value), the revised secondary target values are calculated in such a manner that the response rates become the same. As a result, the controlled object can be controlled stably.

The secondary target value generating unit is implemented by amount-of-change calculating means for calculating respective ones of the maximum amounts of change prior to start of control or at start of control based upon the initial values measured by the plurality of first sensors and the final target values, reference-quantity deviation calculating means for calculating normalized amounts of change obtained by normalizing amounts of change between the initial values and the first controlled variables measured by the plurality of first sensors by respective ones of corresponding maximum amounts of change after start of control, deciding the reference quantity based upon these normalized amounts of change, and calculating reference-quantity deviations between each normalized amount of change and the reference quantity, and target value calculating means for calculating respective ones of the revised secondary target values by revising the secondary target values, based upon the reference-quantity deviations calculated by the reference-quantity deviation calculating means, in such a manner that all normalized amounts of change take on the same value.

In an embodiment of the second aspect of the invention, the secondary target value generating unit is further provided with deviation differential-value calculating means for differentiating, with respect to time, the reference-quantity deviations calculated by the reference-quantity deviation calculating means, thereby calculating respective deviation differential values, the target value calculating means calculating respective ones of the revised secondary target values by revising the secondary target values, in such a manner that all normalized amounts of change take on the same value, based upon the reference-quantity deviations calculated by the reference-quantity deviation calculating means and the deviation differential values calculated by the deviation differential-value calculating means.

In accordance with this embodiment, respective deviation differential values are calculated by differentiating each of the reference-quantity deviations with respect to time. A deviation differential value indicates whether the reference-value deviation shows an increasing tendency or a decreasing tendency.

The respective revised secondary target values are calculated by revising predetermined secondary target values based upon the reference-quantity deviations and deviation differential values in such a manner that all normalized amounts of change take on the same value. When a reference-quantity deviation is large and positive and the deviation differential value is large and negative, the revised secondary target value is set to become smaller.

Accordingly, more appropriate revised secondary target values can be calculated by taking deviation differential values into consideration in addition to reference-quantity deviations.

In a preferred embodiment of the second aspect of the invention, the secondary target value generating unit is further provided with correction gain calculating means for calculating respective correction gains, based upon the reference-quantity deviations calculated by the reference-quantity deviation calculating means and the deviation differential values calculated by the deviation differential-value calculating means, in such a manner that all normalized amounts of change take on the same value, the target value calculating means calculating respective ones of the revised target values by revising the secondary target values based upon the correction gains calculated by the correction gain calculating means.

In accordance with this embodiment, each correction gain is calculated, based upon each reference-value deviation and deviation differential value, in such a manner that all normalized amounts of change take on the same value. Respective ones of the revised secondary target values are calculated by revising the target values based upon the correction gains.

A control system which further generalizes the first and second aspects of the invention is a control system comprising a plurality of actuators for driving controlled objects, a plurality of sensors provided so as to correspond to respective ones of the plurality of actuators for measuring controlled variables of the controlled objects, and a controller for calculating manipulated variables in such a manner that the controlled variables measured by the plurality of sensors will approach respective ones of given target values, and applying these manipulated variables to respective ones of the plurality of actuators, characterized by having a target value generating unit for calculating respective target values, based upon the controlled variables measured by the plurality of sensors and given final target values, in such a manner that all controlled variables respond at the same rate, and applying these target values to the controller.

A control method which further generalizes the first and second aspects of the invention comprises providing a plurality of actuators for driving controlled objects, a plurality of sensors provided so as to correspond to respective ones of the plurality of actuators for measuring controlled variables of the controlled objects, and a controller for calculating manipulated variables in such a manner that the controlled variables measured by the plurality of sensors will approach respective ones of given target values, and applying these manipulated variables to respective ones of the plurality of actuators, calculating respective target values, based upon the controlled variables measured by the plurality of sensors and given final target values, in such a manner that all controlled variables respond at the same rate, and applying these target values to the controller.

In accordance with this invention, respective target values are calculated, based upon controlled variables measured by a plurality of sensors, in such a manner that all controlled variables respond at the same rate to given final target values. These target values are applied to a controller.

Since target values are calculated in such a manner that the rates of change in controlled variables, namely the response speeds of the controlled variables, become the same, an adjustment is performed in such a manner that an object with a fast response will slow down and an object with a slow response will speed up. As a result, the speeds of response become uniform. This makes it possible to controlled the controlled object in a stable manner.

Brief Description of the Drawings

Fig. 1 is a block diagram illustrating the overall configuration of the temperature control system of a mold forming machine;

Fig. 2 is a diagram illustrating the arrangement of a plurality of heaters constructing plate heaters, and temperature sensors provided so as to correspond to respective ones of the heaters;

Fig. 3 is a graph of measured temperatures for a case where target temperatures applied to a multipoint temperature control unit are fixed;

Fig. 4 is a functional block diagram illustrating the detailed architecture of a target temperature generating unit;

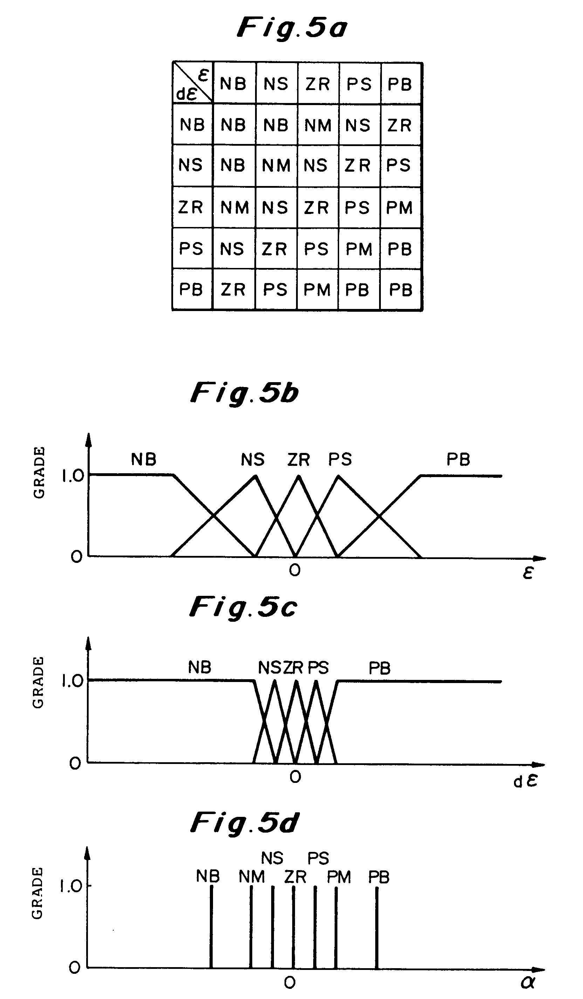

Fig. 5a illustrates fuzzy rules of correction gain inferencing knowledge, Fig. 5b shows five membership functions representing linguistic information "NB", "NS", "ZR", "PS" and "PB" in relation to an antecedent variable "reference-value deviation" of the fuzzy rules, Fig. 5c illustrates five membership functions representing linguistic information "NB", "NS", "ZR", "PS" and "PB" in relation to an antecedent variable "deviation differential" of the fuzzy rules, and Fig. 5d shows seven singletons representing linguistic information "NB", "NM", "NS", "ZR", "PS", "PM" and "PB" in relation to a consequent variable "correction gain" of the fuzzy rules;

Fig. 6a illustrates fuzzy rules of settling-degree inference knowledge, Fig. 6b shows five membership functions representing linguistic information "NS", "ZR", "PS", "PM" and "PB" in relation to an antecedent variable "normalized deviation" of the fuzzy rules, and Fig. 5c illustrates five singletons representing linguistic information "NS", "ZR", "PS", "PM" and "PB" in relation to a consequent variable "degree of settling" of the fuzzy rules;

Fig. 7 is a flowchart illustrating a processing procedure for target temperature generation in a unit for generating target temperature;

Fig. 8a is a graph illustrating target temperature generated by target temperature generating unit, and Fig. 8b is a graph illustrating measured temperature in a case where a multipoint control unit is operated at the target temperature shown in Fig. 8a;

Fig. 9 is a diagram illustrating the overall configuration of the position control system of an overhead traveling crane;

Fig. 10a is a graph showing command velocity generated by conventional control, Fig. 10b is a graph illustrating the position of a hook when controlled by the command velocities illustrated in Fig. 10a, and Fig. 10c is a graph illustrating the trajectories of a trolley and hook when controlled by the command velocities shown in Fig. 10a;

Fig. 11 is a functional block diagram illustrating the detailed architecture of a command velocity generating unit;

Fig. 12 is a flowchart illustrating a procedure for generating command velocity in the command velocity generating unit;

Fig. 13a is a graph showing command velocities generated by the command velocity generating unit, Fig. 13b is a graph illustrating the position of a hook when controlled by the command velocities shown in Fig. 13a, and Fig. 13c is a graph illustrating the trajectories of a trolley and hook when controlled by the command velocities shown in Fig. 13a;

Fig. 14a is a graph illustrating the traveling velocities of a main girder and trolley when the maximum velocity of a command velocity has changed in conformity with traveling distance and drive wheels of the main girder have slipped in conventional control, and Fig. 14b is a graph showing the trajectories of a trolley and hook when the main girder and trolley have been moved at the traveling velocities shown in Fig. 14a; and

Fig. 15a is a graph, similar to that of Fig. 14a, illustrating the traveling velocities of a main girder and trolley, wherein command velocities have been generated by the command velocity generating unit when the wheels of the main girder have slipped, and Fig. 15b is a graph showing the trajectories of the trolley and hook when the trolley has been moved at the traveling velocities shown in Fig. 15a.

Best Mode for Carrying Out the Invention

[First Embodiment]

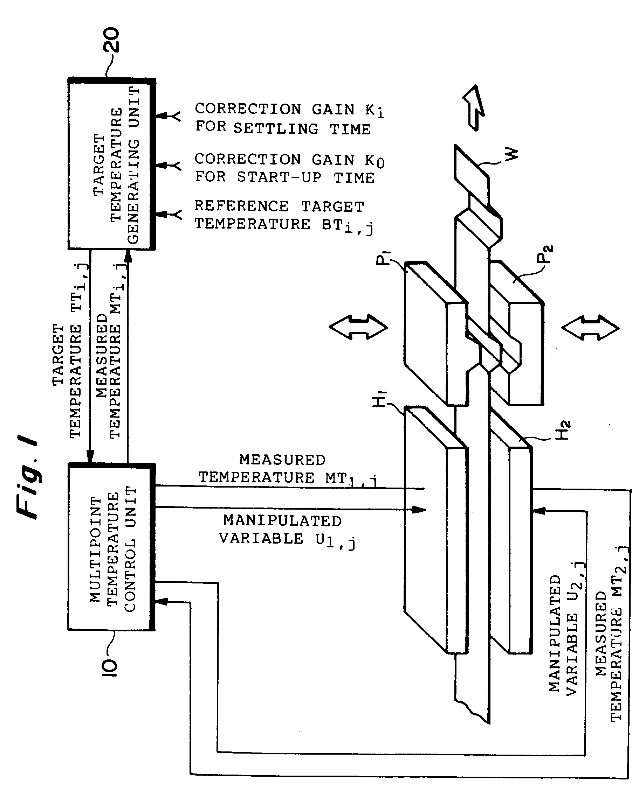

Fig. 1 is a block diagram illustrating the overall configuration of the temperature control system of a mold forming machine.

While being conveyed in continuous fashion, a workpiece W is heated by an upper plate heater $H_1$ and a lower plate heater $H_2$ placed above and below the conveyance path. The heated workpiece W is then subjected to press molding by an upper mold $P_1$ and a lower mold $P_2$ of a press machine.

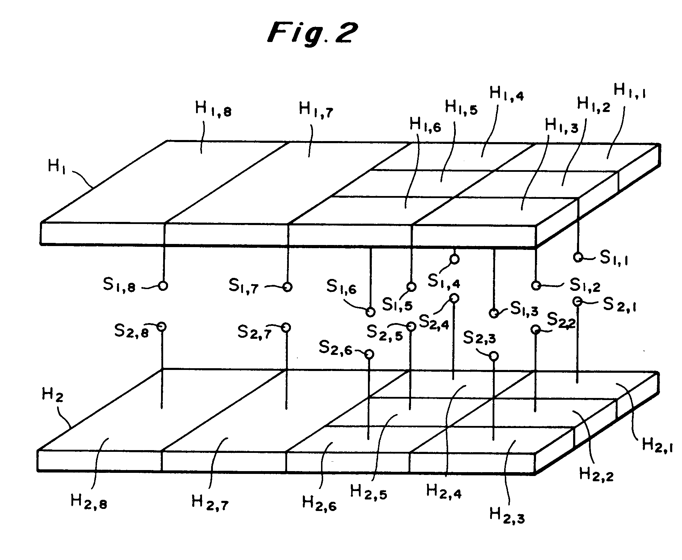

The plate heaters $H_1$ and $H_2$ that heat the workpiece W each comprise a plurality of heaters, as illustrated in Fig. 2. The plate heater $H_1$ comprises heaters $H_{1,1}$, $H_{1,2}$, $H_{1,3}$, $H_{1,4}$, $H_{1,5}$, $H_{1,6}$, $H_{1,7}$ and $H_{1,8}$, and the plate heater $H_2$ comprises heaters $H_{2,1}$, $H_{2,2}$, $H_{2,3}$, $H_{2,4}$, $H_{2,5}$, $H_{2,6}$, $H_{2,7}$ and $H_{2,8}$.

The plurality of heaters constituting each of the plate heaters $H_1$ and $H_2$ are represented simply by $H_{i,j}$ (i = 1, 2: where i represents the plate heater $H_1$ or $H_2$; j = 1 ~ 8: where j represents the plurality of heaters constituting each plate heater $H_1$ or $H_2$).

Further, there are instances where a heater $H_{i,j}$ (i = 1, 2; j = 1 ~ 8) comprises a further plurality of heaters. In such case, these shall be represented collectively by heater $H_{i,j}$ (i = 1, 2; j = 1 ~ 8).

Manipulated variables $U_{1,1}$, $U_{1,2}$, $U_{1,3}$, $U_{1,4}$, $U_{1,5}$, $U_{1,6}$, $U_{1,7}$, $U_{1,8}$, $U_{2,1}$, $U_{2,2}$, $U_{2,3}$, $U_{2,4}$ $U_{2,5}$, $U_{2,6}$, $U_{2,7}$ and $U_{2,8}$ are from a multipoint temperature control unit 10 applied to the heaters $H_{1,1}$, $H_{1,2}$, $H_{1,3}$, $H_{1,4}$, $H_{1,5}$, $H_{1,6}$, $H_{1,7}$, $H_{1,8}$, $H_{2,1}$, $H_{2,2}$, $H_{2,3}$, $H_{2,4}$, $H_{2,5}$, $H_{2,6}$, $H_{2,7}$ and $H_{2,8}$, respectively.

The manipulated variables applied to the respective heaters $H_{i,j}$ (i = 1, 2; j = 1 ~ 8) are represented simply by $U_{i,j}$ (i = 1, 2; j = 1 ~ 8).

Temperature sensors for measuring the atmospheric temperature of the conveyance path (which is approximately equal to the temperature of the workpiece W) are provided at spatial positions corresponding to the central portions of respective ones of the heaters. Specifically, temperature sensors $S_{1,1}$, $S_{1,2}$, $S_{1,3}$, $S_{1,4}$, $S_{1,5}$, $S_{1,6}$, $S_{1,7}$ and $S_{1,8}$ are provided to correspond to the heaters $H_{1,1}$, $H_{1,2}$, $H_{1,3}$, $H_{1,4}$, $H_{1,5}$, $H_{1,6}$, $H_{1,7}$ and $H_{1,8}$, respectively, and the temperatures at positions above the workpiece W spaced a fixed distance away from the workpiece are measured by these temperature sensors. Similarly, temperature sensors $S_{2,1}$, $S_{2,2}$, $S_{2,3}$, $S_{2,4}$, $S_{2,5}$, $S_{2,6}$, $S_{2,7}$ and $S_{2,8}$ are provided to correspond to the heaters $H_{2,1}$, $H_{2,2}$, $H_{2,3}$, $H_{2,4}$, $H_{2,5}$, $H_{2,6}$, $H_{2,7}$ and $H_{2,8}$, respectively, and the temperatures at positions below the workpiece W spaced a fixed distance away from the workpiece are measured by these temperature sensors. These temperature sensors are thermocouples, by way of example.

Temperature sensors corresponding to heaters $H_{i,j}$ (i = 1, 2; j = 1 ~ 8) are represented simply by $S_{i,j}$ (i = 1, 2; j = 1 ~ 8).

Temperatures $MT_{1,1}$, $MT_{1,2}$, $MT_{1,3}$, $MT_{1,4}$, $MT_{1,5}$, $MT_{1,6}$, $MT_{1,7}$, $MT_{1,8}$, $MT_{2,1}$, $MT_{2,2}$, $MT_{2,3}$, $MT_{2,4}$, $MT_{2,5}$, $MT_{2,6}$, $MT_{2,7}$ and $MT_{2,8}$ measured by the temperature sensors $S_{1,1}$, $S_{1,2}$, $S_{1,3}$, $S_{1,4}$, $S_{1,5}$, $S_{1,6}$, $S_{1,7}$, $S_{1,8}$, $S_{2,1}$, $S_{2,2}$, $S_{2,3}$, $S_{2,4}$, $S_{2,5}$, $S_{2,6}$, $S_{2,7}$ and $S_{2,8}$, respectively, are applied to the multipoint temperature control unit 10. The measured temperatures are further supplied to a target temperature generating unit 20 from the multipoint temperature control unit 10.

The temperatures measured by the temperature sensors $S_{i,j}$ (i = 1, 2; j = 1 ~ 8) are represented by $MT_{i,j}$ (i = 1, 2; j = 1 ~ 8) below.

The multipoint temperature control unit 10 is provided with target temperatures $TT_{1,1}$, $TT_{1,2}$, $TT_{1,3}$, $TT_{1,4}$, $TT_{1,5}$, $TT_{1,6}$, $TT_{1,7}$, $TT_{1,8}$, $TT_{2,1}$, $TT_{2,2}$, $TT_{2,3}$, $TT_{2,4}$, $TT_{2,5}$, $TT_{2,6}$, $TT_{2,7}$ and $TT_{2,8}$ of $H_{1,1}$, $H_{1,2}$, $H_{1,3}$, $H_{1,4}$, $H_{1,5}$, $H_{1,6}$, $H_{1,7}$, $H_{1,8}$, $H_{2,1}$, $H_{2,2}$, $H_{2,3}$, $H_{2,4}$, $H_{2,5}$, $H_{2,6}$, $H_{2,7}$ and $H_{2,8}$, respectively, by the target temperature generating unit 20, described later.

The target temperatures of the heaters $H_{i,j}$ (i = 1, 2; j = 1 ~ 8) are represented simply by $TT_{i,j}$ (i = 1, 2; j = 1 ~ 8).

For each heater $H_{i,j}$ (i = 1, 2; j = 1 ~ 8), the multipoint temperature control unit 10 decides a manipulated variable $U_{i,j}$ in such a manner that the measured temperature $MT_{i,j}$ measured by the temperature sensor $S_{i,j}$ will attain the target temperature $TT_{i,j}$ provided by the target temperature generating unit 20. An example of the multipoint temperature control unit 10 is a discrete-time control unit which performs temperature control by PID control. The control period of the multipoint temperature control unit 10 is 2 [sec], by way of example.

The multipoint temperature control unit 10 may be provided as separate multipoint temperature control units for each of the plate heaters $H_1$ and $H_2$. In other words, two multipoint temperature control units may be provided. Further, the multipoint temperature control unit 10 may be provided with separate controllers for each of the heaters $H_{i,j}$ (i = 1, 2; j = 1 ~ 8). In other words, 16 controllers may be provided.

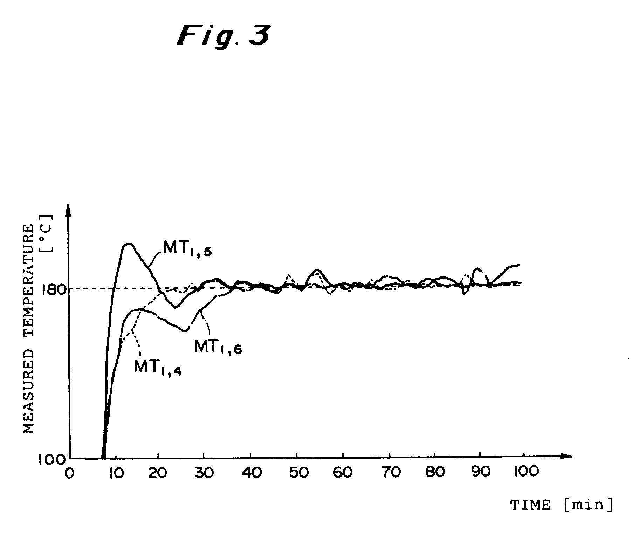

Fig. 3 is a graph of measured temperatures $MT_{1,4}$, $MT_{1,5}$ and $MT_{1,6}$ of heaters $H_{1,4}$, $H_{1,5}$ and $H_{1,6}$, respectively, at start-up of the temperature control system in a case where all of the target temperatures $TT_{i,j}$ (i = 1, 2; j = 1 ~ 8) provided by the target temperature generating unit 20 are a constant 180°C.

It is seen in the graph that the response of the measured temperature $MT_{1,5}$ of heater $H_{1,5}$ situated at the center of the plurality of heaters $H_{1,j}$ (j = 1 ~ 8) constructing the heater plate $H_1$ is fast in comparison with those of the measured temperature $MT_{1,4}$ of heater $H_{1,4}$ and measured temperature $MT_{1,6}$ of heater $H_{1,6}$ situated on the outer side. Further, the measured temperature $MT_{1,5}$ of heater $H_{1,5}$ situated at the center exhibits a large overshoot. This is because the heater $H_{1,5}$ is influenced (interfered with) by the heat from the surrounding heaters $H_{1,3}$, $H_{1,4}$, $H_{1,5}$ and $H_{1,7}$.

In order to prevent such interference, the target temperature generating unit 20 generates the target temperatures $TT_{i,j}$ (i = 1, 2; j = 1 ~ 8) in such a manner that the responses of the measured temperatures $MT_{i,j}$ of the respective heaters $H_{i,j}$ will take on a common rate.

Reference target temperatures serving as a reference for the respective target temperatures applied to the multipoint temperature control unit 10 enter the target temperature generating unit 20. Specifically, reference target temperatures $BT_{1,1}$, $BT_{1,2}$, $BT_{1,3}$, $BT_{1,4}$, $BT_{1,5}$, $BT_{1,6}$, $BT_{1,7}$, $BT_{1,8}$, $BT_{2,1}$, $BT_{2,2}$, $BT_{2,3}$, $BT_{2,4}$, $BT_{2,5}$, $BT_{2,6}$, $BT_{2,7}$ and $BT_{2,8}$ corresponding to the heaters $H_{1,1}$, $H_{1,2}$, $H_{1,3}$, $H_{1,4}$, $H_{1,5}$, $H_{1,6}$, $H_{1,7}$, $H_{1,8}$, $H_{2,1}$, $H_{2,2}$, $H_{2,3}$, $H_{2,4}$, $H_{2,5}$, $H_{2,6}$, $H_{2,7}$ and $H_{2,8}$, respectively, enter the target temperature generating unit 20.

The reference target temperatures of the heaters $H_{i,j}$ (i = 1, 2; j = 1 ~ 8) are represented simply by $BT_{i,j}$ (i = 1, 2; j = 1 ~ 8).

A correction gain $K_0$ for start-up time and a correction gain $K_1$ for settling time enter the target temperature generating unit 20.

The correction gain $K_0$ for start-up time is for adjusting the correction gain of the reference target temperature which corrects the target temperature at start-up time (the transient state). The optimum value is set in conformity with the controlled object. The correction gain $K_0$ for start-up time is 0 ~ 1. The default value when there is no input of the correction gain $K_0$ for start-up time is 1.

The correction gain $K_1$ for settling time is for adjusting the correction gain of the reference target temperature which corrects the target temperature at settling time (the steady state). The optimum value is set in conformity with the controlled object. The correction gain $K_1$ for start-up time is 0 ~ 1. The default value when there is no input of the correction gain $K_1$ for start-up time is 1.

The target temperature generating unit 20 generates the target temperatures $TT_{i,j}$ (i = 1, 2; j = 1 ~ 8) based upon the measured temperature $MT_{i,j}$ (i = 1, 2; j = 1 ~ 8), the reference target temperature $BT_{i,j}$ (i = 1, 2; j = 1 ~ 8), the correction gain $K_0$ for start-up time and the correction gain $K_1$ for settling time.

The plurality of heaters $H_{1,j}$ (j = 1 ~ 8) constructing the plate heater $H_1$ form one group and the plurality of heaters $H_{2,j}$ (j = 1 ~ 8) constructing the plate heater $H_2$ form one group. The target temperatures are generated, on a per-group basis, for each heater in the group.

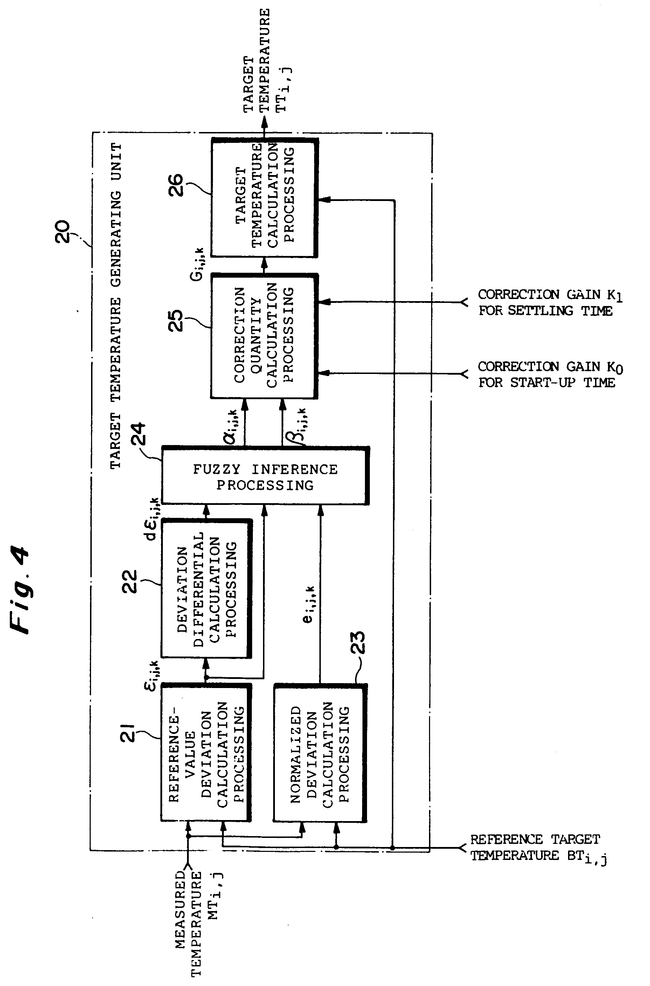

Fig. 4 is a functional block diagram illustrating the details of the architecture of the target temperature generating unit 20.

The target temperature generating unit 20 comprises reference-value deviation calculation processing 21, deviation differential calculation processing 22, normalized deviation calculation processing 23, fuzzy inference processing 24, correction quantity calculation processing 25 and target temperature calculation processing 26. The target temperature generating unit 20 is implemented by a computer system and software run by this computer system. Each processing is a program routine.

The target temperature generating unit 20 captures the measured temperatures $MT_{i,j}$ (i = 1, 2; j = 1 ~ 8), which are provided by the multipoint temperature control unit 10, at a fixed generation period $T_{set}$.

Measured temperatures $MT_{i,j}$ (i = 1, 2; j = 1 ~ 8) captured in the current processing cycle k are represented by $MT_{i,j,k}$ (i = 1, 2; j = 1 ~ 8). The optimum gen-

eration period of $T_{set}$ is set by the operator in conformity with the control system. The generation period Tset is 2 ~ 60 [sec], e.g., 20 [sec].

The target temperature generating unit 20 captures the entered reference target temperatures $BT_{i,j}$ (i = 1, 2; j = 1 ~ 8) as well as the correction gain $K_0$ for start-up time and the correction gain $K_1$ for settling time.

Since the reference target temperatures $BT_{i,j}$ (i = 1, 2; j = 1 ~ 8), the correction gain $K_0$ for start-up time and the correction gain $K_1$ for settling time usually are constant values, these are expressed as they are without using the subscript "k". When the values of the reference target temperatures $BT_{i,j}$ (i = 1, 2; j = 1 ~ 8), the correction gain $K_0$ for start-up time and the correction gain $K_1$ for settling time are altered during the course of operation, the altered values are used in the generation of the target temperatures.

The reference-value deviation calculation processing 21 calculates a reference-value deviation $\varepsilon_{i,j,k}$ for every measured temperature $MT_{i,j,k}$ (i = 1, 2; j = 1 ~ 8) on the basis of measured temperature $MT_{i,j,k}$ and reference target temperature $BT_{i,j}$.

The reference-value deviations $\varepsilon_{i,j,k}$ are deviations between normalized measured temperatures $NT_{i,j,k}$ and reference values $NTB_{i,k}$.

The normalized measured temperatures $NT_{i,j,k}$ are obtained by normalizing the measured temperatures $MT_{i,j,k}$ by the reference target temperatures $BT_{i,j}$. More specifically, the normalized measured temperatures $NT_{i,j,k}$ (i = 1, 2; j = 1 ~ 8) are represented by the following equation:

$$NT_{i,j,k} = \frac{(MT_{i,j,k})}{(BT_{i,j})} \qquad (1)$$

Since there are occasions where the reference target temperatures $BT_{i,j}$ are set to different values for each of the heaters $H_{i,j,k}$, the measured temperatures $MT_{i,j,k}$ are normalized by the reference target temperatures $BT_{i,j}$. A normalized measured temperature $NT_{i,j,k}$ indicates to what extent the measured temperature $MT_{i,j,k}$ of each heater $H_{ij}$ has attained the reference target temperature $BT_{i,j,k}$. When the normalized measured temperature $NT_{i,j,k}$ is such that $NT_{i,j,k} = 1$ holds, the measured temperature $MT_{i,j,k}$ is in agreement with the reference target temperature $BT_{i,j}$.

Reference values $NTB_{i,k}$ are decided for each group (plate heater $H_1$ or $H_2$). The method of deciding a reference value $NTB_{i,k}$ differs depending upon whether it is start-up time (the transient state) or settling time (the steady state). Reference values $NTB_{i,k}$ may be decided by the same method as that at start-up time even at settling time.

In this case, starting time refers to an instance where all measured temperatures $MT_{i,j,k}$ (j = 1 ~ 8) in one group are less than or equal to the reference target temperature $BT_{i,j}$, i.e., an instance where all normalized measured temperatures $NT_{i,j,k}$ are such that $NT_{i,j,k} \leqq 1$ holds.

Settling time refers to an instance where any one measured temperature $MT_{i,j,k}$ (j = 1 ~ 8) in one group is greater than the reference target temperature $BT_{i,j}$, i.e., an instance where any one normalized measured temperature $NT_{i,j,k}$ is such that $NT_{i,j,k} > 1$ holds.

A case where a predetermined number of normalized measured temperatures among the normalized measured temperatures $NT_{i,j,k}$ in one group satisfy the relation $NT_{i,j,k} > 1$, or a case where one or a predetermined number of the normalized measured temperatures $NT_{i,j,k}$ (j = 1 ~ 8) has (have) fallen into a fixed range centered on 1, is adopted as settling time; any time other than settling time is adopted as start-up time.

① Start-up time (transient state)

The reference value $NTB_{i,k}$ is a mean value of normalized measured temperatures $NT_{i,j,k}$ (j = 1 ~ 8) of all heaters $H_{i,j}$ (j = 1 ~ 8) constituting one group (plate heater $H_1$ or $H_2$). That is, a reference value $NTB_{i,k}$ (i = 1, 2) is represented by the following equation:

$$NT_{i,k} = \frac{\sum\limits_{i=1}^{8} NT_{i,j,k}}{8} \qquad (2)$$

The reference value $NTB_{i,k}$ may be made the minimum value of the normalized measured temperatures $NT_{i,j,k}$.

② Settling time (steady state)

The reference value $NTB_{i,k}$ is 1. That is, the reference value $NTB_{i,k}$ (i = 1, 2) is represented by the following equation:

$$NTB_{i,k} = 1 \qquad (3)$$

Accordingly, the reference-value deviation $\varepsilon_{i,j,k}$ (i = 1, 2; j = 1 ~ 8) is represented by the following equation:

$$\varepsilon_{i,j,k} = NT_{i,j,k} - NTB_{i,k} \qquad (4)$$

The reference-value deviations $\varepsilon_{i,j,k}$ (i = 1, 2; j = 1 ~ 8) calculated in accordance with Equation (4) are supplied from the reference-value deviation calculation processing 21 to the deviation differential calculation processing 22 and fuzzy inference processing 24.

On the basis of the reference-value deviations $\varepsilon_{i,j,k}$ calculated in the current processing cycle k and the reference-value deviations $\varepsilon_{i,j,k-1}$ calculated in the preceding processing cycle (k-1) (these reference value deviations are provided by the reference-value deviation calculation processing 21), and the generation period $T_{set}$, the deviation differential calculation processing 22 calculates a deviation differential $d\varepsilon_{i,j,k}$ for every reference-value deviation $\varepsilon_{i,j,k}$.

The deviation differential $d\varepsilon_{i,j,k}$ ($i$ = 1, 2; $j$ = 1 ~ 8) is calculated in accordance with the following equation:

$$d\varepsilon_{i,j,k} = \frac{\varepsilon_{i,j,k} - \varepsilon_{i,j,k-1}}{T_{set}} mp \qquad (5)$$

The deviation differentials $d\varepsilon_{i,j,k}$ ($i$ = 1, 2; $j$ = 1 ~ 8) calculated in accordance with Equation (5) are supplied from the deviation differential calculation processing 22 to the fuzzy inference processing 24.

The normalized deviation calculation processing 23 calculates normalized deviations $e_{i,j,k}$ with regard to respective ones of the measured temperatures $MT_{i,j}$ ($i$ = 1, 2; $j$ = 1 ~ 8) based upon the captured measured temperatures $MT_{i,j,k}$ and reference target temperatures $BT_{i,j}$.

The normalized deviation $e_{i,j,k}$ is obtained by normalizing the difference between the measured temperature $MT_{i,j,k}$ and the reference target temperature $BT_{i,j}$ by the reference target temperature $BT_{i,j}$. That is, normalized deviation $e_{i,j,k}$ ($i$ = 1, 2; $j$ = 1 ~ 8) is represented by the following equation:

$$e_{i,j,k} = \frac{MT_{i,j,k} - BT_{i,j}}{BT_{i,j}} \qquad (6)$$

The normalized deviations $e_{i,j,k}$ ($i$ = 1, 2; $j$ = 1 ~ 8) calculated in accordance with Equation (6) are supplied from the normalized deviation calculation processing 23 to the fuzzy inference processing 24.

The fuzzy inference processing 24 calculates correction gains $\alpha_{i,j,k}$ and degrees of settling $\beta_{i,j,k}$ for every reference target temperature $BT_{i,j}$ ($i$ = 1, 2; $j$ = 1 ~ 8).

Using correction gain inferencing knowledge that has already been set, the fuzzy inference processing 24 calculates correction gain $\alpha_{i,j,k}$ for every reference target temperature $BT_{i,j}$ ($i$ = 1, 2; $j$ = 1 ~ 8) based upon reference-value deviations $\varepsilon_{i,j,k}$ provided by the reference-value deviation calculation processing 21 and deviation differentials $d\varepsilon_{i,j,k}$ provided by the deviation differential calculation processing 22.

Figs. 5a ~ 5d illustrate an example of correction gain inferencing knowledge set in the fuzzy inference processing 24 in advance. The subscripts i, j, k of the antecedent variables and consequent variables in this correction gain inferencing knowledge have been deleted.

Fig. 5a is an example of fuzzy rules of correction gain inferencing knowledge. For example, the fuzzy rule at the lower right of this figure is "IF $\varepsilon$ = PM AND $d\varepsilon$ = PB THEN $\alpha$ = PM ."

Fig. 5b is an example of five membership functions representing linguistic information "NB (Negative Big)", "NS (Negative small)", "ZR (Zero)", "PS (Positive small)" and "PB (Positive Big)" in relation to the antecedent variable "reference-value deviation $\varepsilon$" of the fuzzy rules of correction gain inferencing knowledge.

Fig. 5c is an example of five membership functions representing linguistic information "NB", "NS", "ZR", "PS" and "PB" in relation to an antecedent variable "deviation differential $\varepsilon$" of the fuzzy rules of correction gain inferencing knowledge.

Fig. 5d is an example of seven singletons representing linguistic information "NB", "NM (Negative Medium)", "NS", "ZR", "PS", "PM (Positive Medium)" and "PB" in relation to an consequent variable "correction gain $\alpha$" of the fuzzy rules of correction gain inferencing knowledge.

The larger the deviation $\varepsilon_{i,j,k}$ between normalized measured temperature $NT_{i,j,k}$ and reference value $NTB_{i,j,k}$, the larger the correction gain $\alpha_{i,j,k}$. The smaller the deviation $\varepsilon_{i,j,k}$ between normalized measured temperature $NT_{i,j,k}$ and reference value $NTB_{i,j,k}$, the smaller the correction gain $\alpha_{i,j,k}$.

Further, using settling-degree inferencing knowledge that has already been set, the fuzzy inference processing 24 calculates a degree of settling $\beta_{i,j,k}$ for every reference target temperature $BT_{i,j}$ ($i$ = 1, 2; $j$ = 1 ~ 8) based upon the normalized deviation $e_{i,j,k}$ provided by the normalized deviation calculation processing 23.

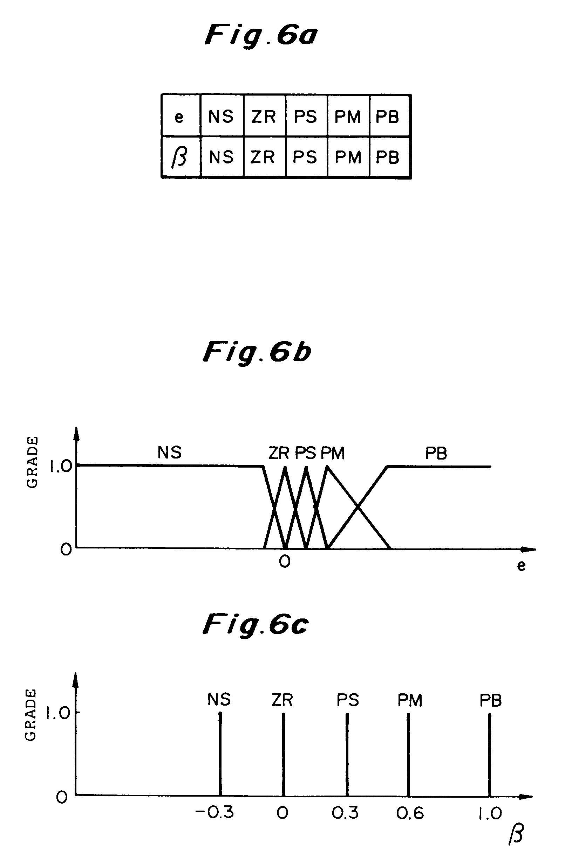

Figs. 6a ~ 6c illustrate an example of settling-degree inferencing knowledge set in the fuzzy inference processing 24 in advance. The subscripts i, j, k of the antecedent variables and consequent variables in this settling-degree inferencing knowledge have been deleted.

Fig. 6a is an example of fuzzy rules of settling-degree inferencing knowledge. For example, the fuzzy rule on the right side of this figure is "IF $e$ = PB THEN $\beta$ = PB ."

Fig. 6b is an example of five membership functions representing linguistic information "NS", "ZR", "PS", "PM" and "PB" in relation to the antecedent variable "normalized deviation $e$" of the fuzzy rules of settling-degree inferencing knowledge.

Fig. 6c is an example of five singletons representing linguistic information "NS", "ZR", "PS", "PM" and "PB" in relation to the consequent variable "degree of settling $\beta$" of the fuzzy rules of settling-degree inferencing knowledge.

The closer the absolute value of the degree of settling $\beta_{i,j,k}$ is to 0, the closer measured temperature $MT_{i,j,k}$ is to reference target temperature $BT_{i,j}$ (settling time; steady state). The closer the absolute value of the degree of settling $\beta_{i,j,k}$ is to 1, the farther measured temperature $MT_{i,j,k}$ is from reference target temperature $BT_{i,j}$ (start-up time; transient state).

Correction gain $\alpha_{i,j,k}$ ($i$ = 1, 2; $j$ = 1 ~ 8) and degree of settling $\beta_{i,j,k}$ ($i$ = 1, 2; $j$ = 1 ~ 8) obtained by fuzzy inference are supplied from the fuzzy inference processing 24 to the correction quantity calculation processing 25.

The correction quantity calculation processing 25 calculates a correction quantity $G_{i,j,k}$ for every reference target temperature $BT_{i,j}$ ($i$ = 1, 2; $j$ = 1 ~ 8) based upon the correction gain $\alpha_{i,j,k}$ ($i$ = 1, 2; $j$ = 1 ~ 8) and degree of settling $\beta_{i,j,k}$, which are provided by the fuzzy inference processing 24, the correction gain $K_0$ for start-up time and the correction gain $K_1$ for settling time. The correction quantity $G_{i,j,k}$ is represented by the following equation:

$$G_{i,j,k} = \alpha_{i,j,k} \cdot \{|\beta_{i,j,k}| \cdot (K_0 - K_1) + K_1\} \qquad (7)$$
$$= \alpha_{i,j,k} \cdot \{|\beta_{i,j,k}| \cdot K_0 + (1 - |\beta_{i,j,k}|) \cdot K_1\}$$

The nearer the start-up time (transient state), i.e., the closer the settling time $\beta_{i,j,k}$ is to 1, the more effective correction gain $K_0$ for start-up time is in the correction quantity $G_{i,j,k}$. The nearer the settling time (steady state), i.e., the closer the settling time $\beta_{i,j,k}$ is to 0, the more effective correction gain $K_1$ for settling time is in the correction quantity $G_{i,j,k}$.

The correction quantity $G_{i,j,k}$ ($i = 1, 2; j = 1 \sim 8$) calculated in accordance with Equation (7) is supplied from the correction quantity calculation processing 25 to the target temperature calculation processing 26.

The target temperature calculation processing 26 calculates target temperature $TT_{i,j,k}$ for every reference target temperature $BT_{i,j}$ ($i = 1, 2; j = 1 \sim 8$) by revising the reference target temperature $BT_{i,j}$ using the correction quantity $G_{i,j,k}$ provided by the correction quantity calculation processing 25.

The target temperature $TT_{i,j,k}$ ($i = 1, 2; j = 1 \sim 8$) is represented by the following equation:

$$TT_{i,j,k} = BT_{i,j} \cdot (1 - G_{i,j,k}) \qquad (8)$$

Target temperatures $TT_{i,j,k}$ ($i = 1, 2; j = 1 \sim 8$) calculated in accordance with Equation (8) are supplied from the correction quantity calculation processing 25 to the multipoint temperature control unit 10 as target temperatures $TT_{i,j}$ ($i = 1, 2; j = 1 \sim 8$), respectively.

Thus, target temperatures are generated by the target temperature generating unit 20.

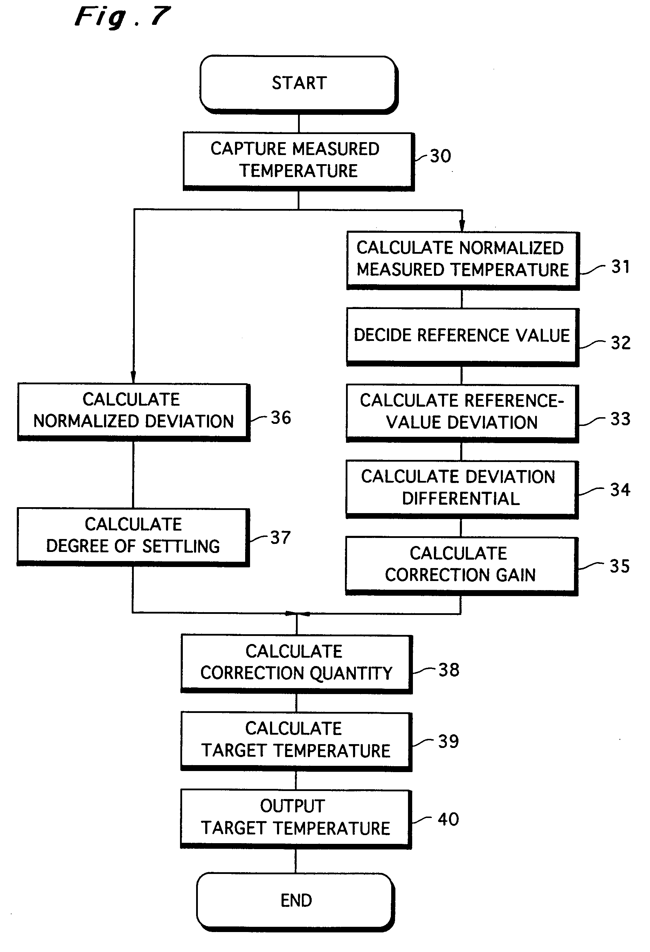

Fig. 7 is a flowchart illustrating a processing procedure for target temperature generation in the target temperature generating unit 20. It is assumed here that the current generation of target temperatures is processing cycle K.

The target temperature generating unit 20 captures the measured temperatures $MT_{i,j}$ ($i = 1, 2; j = 1 \sim 8$), which are provided by the multipoint temperature control unit 10, at the fixed generation period $T_{set}$ (step 30). The measured temperatures $MT_{i,j}$ ($i = 1, 2; j = 1 \sim 8$) captured in the current processing cycle k are represented by measured temperatures $MT_{i,j,k}$ ($i = 1, 2; j = 1 \sim 8$).

The reference-value deviation calculation processing 21 calculates the normalized measured temperatures $NT_{i,j,k}$ ($i = 1, 2; j = 1 \sim 8$) by normalizing the measured temperatures $MT_{i,j,k}$ by the reference target temperatures $BT_{i,j}$ for every measured temperature $MT_{i,j,k}$ ($i = 1, 2; j = 1 \sim 8$) captured (step 31).

The reference-value deviation calculation processing 21 decides the reference values $NTB_{i,k}$ ($i = 1, 2$) for every group (plate heater $H_1$ or $H_2$) based upon the normalized measured temperatures $NT_{i,j,k}$ (step 32).

The reference-value deviation calculation processing 21 calculates the reference-value deviations $\varepsilon_{i,j,k}$ ($i = 1, 2; j = 1 \sim 8$) between the normalized measured temperatures $NT_{i,j,k}$ and the reference values $NTB_{i,j}$ for every reference-value deviation $\varepsilon_{i,j,k}$ ($i = 1, 2; j = 1 \sim 8$) (step 33).

The deviation differential calculation processing 22 calculates the deviation differentials $d\varepsilon_{i,j,k}$ ($i = 1, 2; j = 1 \sim 8$) for every reference-value deviation $\varepsilon_{i,j,k}$ ($i = 1, 2; j = 1 \sim 8$) based upon the current reference-value deviations $\varepsilon_{i,j,k}$ and preceding reference-value deviations $\varepsilon_{i,j,k-1}$ (step 34).

Using the correction gain inferencing knowledge that has already been set, the fuzzy inference processing 24 calculates the correction gains $\alpha_{i,j,k}$ ($i = 1, 2; j = 1 \sim 8$) for every reference-value deviation $\varepsilon_{i,j,k}$ ($i = 1, 2; j = 1 \sim 8$) based upon the reference-value deviations $\varepsilon_{i,j,k}$ and deviation differentials $d\varepsilon_{i,j,k}$ (step 35).

The normalized deviation calculation processing 23 calculates the normalized deviations $e_{i,j,k}$ ($i = 1, 2; j = 1 \sim 8$) for every captured measured temperature $MT_{i,j,k}$ ($i = 1, 2; j = 1 \sim 8$) by normalizing the deviations between the measured temperatures $MT_{i,j,k}$ and the reference target temperatures $BT_{i,j}$ by the reference target temperatures $BT_{i,j}$ (step 36).

Using settling-degree inferencing knowledge that has already been set, the fuzzy inference processing 24 calculates the degrees of settling $\beta_{i,j,k}$ ($i = 1, 2; j = 1 \sim 8$) for every normalized deviation $e_{i,j,k}$ ($i = 1, 2; j = 1 \sim 8$) based upon normalized deviations $e_{i,j,k}$ (step 37).

The correction quantity calculation processing 25 calculates the correction quantities $G_{i,j,k}$ ($i = 1, 2; j = 1 \sim 8$) for every reference target temperature $BT_{i,j}$ ($i = 1, 2; j = 1 \sim 8$) based upon the correction gains $\alpha_{i,j,k}$ and degrees of settling $\beta_{i,j,k}$ (step 38).

The target temperature calculation processing 26 calculates the target temperatures $TT_{i,j,k}$ ($i = 1, 2; j = 1 \sim 8$) for every reference target temperature $BT_{i,j}$ ($i = 1, 2; j = 1 \sim 8$) by revising the reference target temperatures $BT_{i,j}$ using the correction quantities $G_{i,j,k}$ (step 39).

The target temperature generating unit 20 outputs the target temperatures $TT_{i,j,k}$ ($i = 1, 2; j = 1 \sim 8$) to the multipoint temperature control unit 10 as the target temperatures $TT_{i,j}$ ($i = 1, 2; j = 1 \sim 8$), respectively (step 40).

The multipoint temperature control unit 10 performs control using the target temperatures $TT_{i,j}$ ($TT_{i,j,k}$) ($i = 1, 2; j = 1 \sim 8$) outputted by the target temperature generating unit 20. The multipoint temperature control unit 10 performs control using the target temperatures $TT_{i,j,k}$ ($i = 1, 2; j = 1 \sim 8$) generated by the current target temperature generation processing until the target temperatures $TT_{i,j,k+1}$ ($i = 1, 2; j = 1 \sim 8$) of the next cycle are provided by the target temperature generating unit 20.

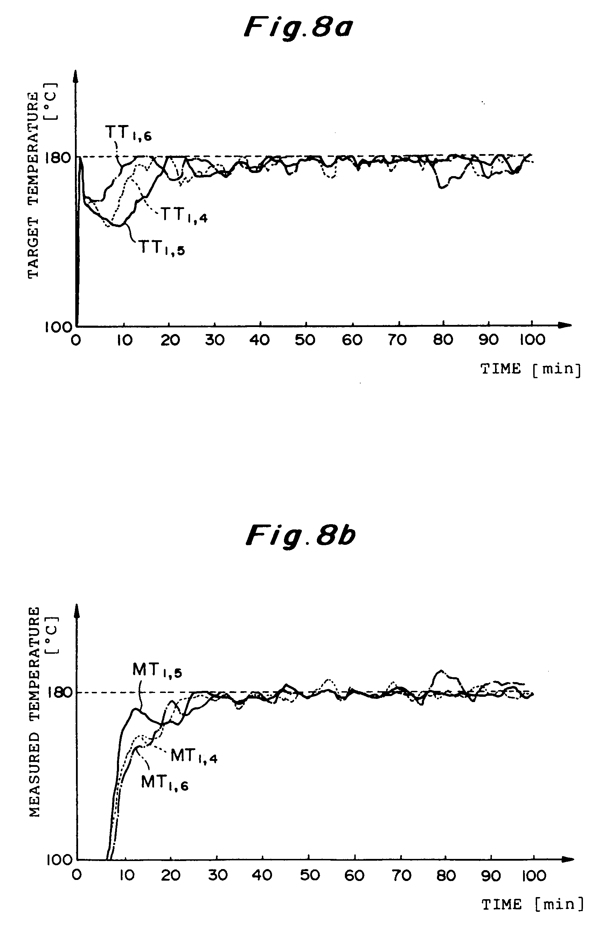

Fig. 8a illustrates a graph of target temperatures $TT_{1,4}$, $TT_{1,5}$ and $TT_{1,6}$ from among the target temperatures $TT_{i,j}$ ($i = 1, 2; j = 1 \sim 8$) generated by the target temperature generating unit 20. Fig. 8b illustrates a graph of measured temperatures $MT_{1,4}$, $MT_{1,5}$ and $MT_{1,6}$ from among the measured temperatures $MT_{i,j}$ (i = 1, 2; j = 1 ~ 8) measured when the multipoint temperature control unit 10 was operated at the target temperatures shown in Fig. 8a. If a comparison is made with the case of Fig. 3 in which the target temperatures are fixed, it will be seen that the target temperature $TT_{1,5}$ regarding the heater $H_{1,5}$ is held below the reference target temperature $BT_{1,5}$ so that the measured temperature $MT_{1,5}$ does not develop overshoot. As a result, settling time is shortened.

[Second Embodiment]

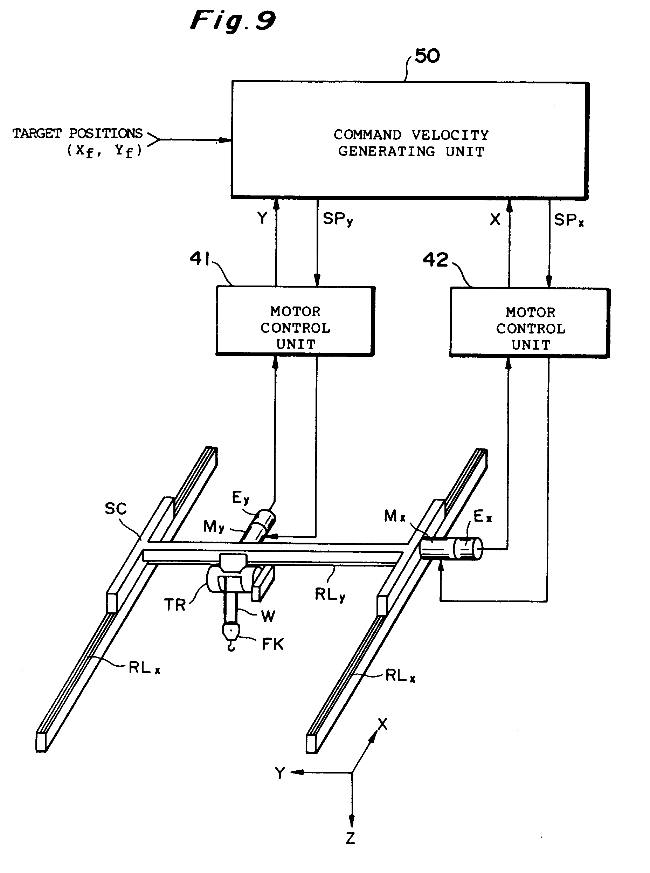

Fig. 9 is a block diagram illustrating the overall configuration of the position control system of an overhead traveling crane.

Two parallel rails $RL_x$ extending in one direction (referred to as the "X direction") are provided at a suitable height. A main girder or main beam MB is supported on the rails $RL_x$ and is free to travel on the rails $RL_x$. The main girder MB is also provided with a rail $RL_y$, which extends is a direction (referred to as the "Y direction") perpendicular to the X direction. A trolley TR is supported on the rail $RL_y$ and is free to move along the rail $RL_y$. A hoist is secured to the trolley TR. A hook FK for engaging a suspended load is attached to the distal end of a wire W raised and lowered by the hoist.

The main girder MB is caused to travel by a traveling motor $M_x$ provided on the main girder MB. The position X of the main girder MB is detected by an encoder $E_x$ for detecting the rotational speed of the traveling motor $M_x$. The position X (referred to as the "measured position X" below) of the main girder MB detected by the encoder $E_x$ is applied to a motor control unit 41 and also to a command velocity generating unit 50.

The trolley TR is caused to travel by a transverse motor $M_y$ provided on the trolley TR. The position Y of the trolley TR is detected by an encoder $E_y$ for detecting the rotational speed of the transverse motor $M_y$. The position Y (referred to as the "measured position Y" below) of the trolley TR on the rail $RL_x$ detected by the encoder $E_y$ is applied to the motor control unit 41 and also to the command velocity generating unit 50.

The coordinates of the trolley TR are represented by (X,Y) below using the measured position X of the main girder MB (the measured position of the trolley TR in the X direction) and the measured position Y of the trolley TR.

The motor control unit 41 controls the traveling motor $M_x$ in such a manner that traveling velocity $MV_x$ of the main girder MB based upon the measured position X detected by the encoder $E_x$ will become equal to a command velocity $SP_x$ provided by the command velocity generating unit 50.

Similarly, the motor control unit 42 controls the transverse motor $M_y$ in such a manner that traveling velocity $MV_y$ of the trolley TR based upon the measured position Y detected by the encoder $E_y$ will become equal to a command velocity $SP_y$ provided by the command velocity generating unit 50. It may be so arranged that the traveling velocities detected by providing a velocity sensor on each motor.

The hoist is provided with a hoisting motor (not shown) for raising and lowering the wire W. The operator manipulates a control panel to rotate the hoisting motor and raise or lower the hook FK.

The command velocity generating unit 50 generates the command velocities ($SP_x$, $SP_y$), which are to be applied to the motor control units 41, 42, for moving the main girder MB and trolley TR from the position occupied before transport by the overhead traveling crane [this position shall be referred to as the "initial position $(X_0,Y_0)$" below] to a desired position [referred to as the "target position $(X_f,Y_f)$" below] entered by the operator.

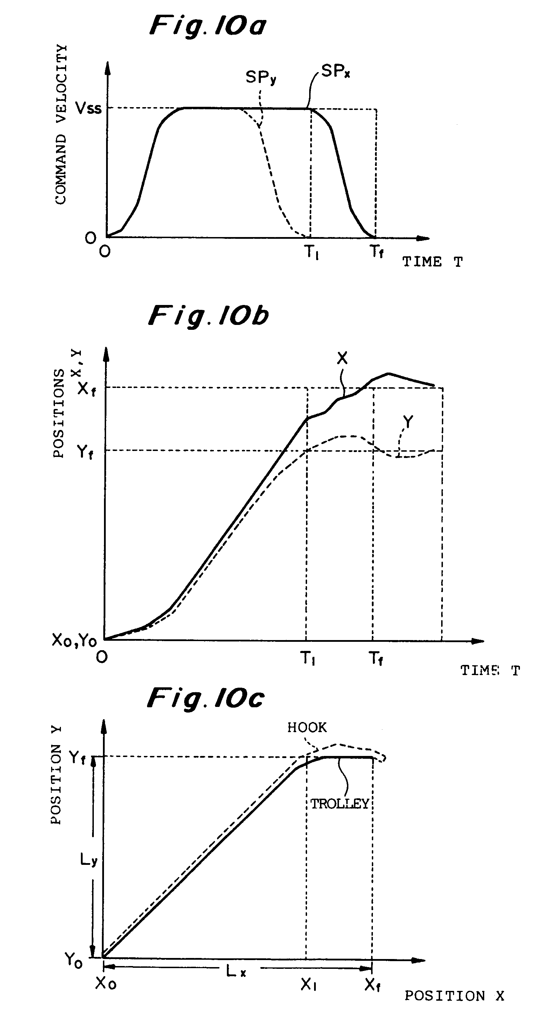

Fig. 10a is a graph illustrating command velocity based upon conventional control, in which a command velocity is generated independently in each direction in accordance with a velocity pattern set in advance. Fig. 10b is a graph illustrating the position of a hook when controlled by the command velocity illustrated in Fig. 10a, and Fig. 10c is a graph illustrating the position (measured position) of the trolley TR and the position of the hook FK.

As shown in Fig. 10a, the velocity pattern of command velocity based upon conventional control first accelerates in such a manner that the hook FK will swing as little as possible from the initial position $(X_0,Y_0)$ of trolley TR to the steady running velocity (maximum velocity) $V_{SS}$. Second, when the maximum velocity $V_{SS}$ is attained, this velocity is maintained. Third, the pattern decelerates and stops in such a manner that the hook FK will come to rest at the target position $(X_f,Y_f)$ without swinging. Since the distance or time required for the main girder MB and trolley TR to come to rest (velocity 0) from the maximum velocity $V_{SS}$ is already known, the timing (position) at which deceleration is started is decided based upon the target position.

Since maximum traveling distance $L_y$ along the Y axis is smaller than maximum traveling distance $L_x$ along the X axis, the main girder MB (Y-axis direction) comes to rest at time $T_1$ and the trolley TR (X-axis direction) comes to rest at time $T_f$, as will be understood from Fig. 10a. When the trolley TR reaches position $X_1$ (time T1), the main girder MB stops but the trolley TR continues moving, as will be appreciated from Figs. 10b and 10b. Accordingly, the traveling direction (velocity vector) of hook FK suddenly changes, a Coriolis force acts upon the hook FK owing to the change in traveling direction and the hook FK swings in the direction perpendicular to the X-axis direction.

Since the hook FK swings in this manner, the suspended load cannot be lowered until the swinging of the hook FK diminishes, even though the trolley TR has reached the target position. The result is prolonged transport time. Further, owing to swinging of the hook FK, a safe zone must be enlarged in addition to the work area.

On the basis of the measured positions X, Y [referred to as "measured positions (X,Y) below] detected by the encoders Ex, Ey, respectively, the command velocity generating unit 50 generates the command velocities ($SP_x$, $SP_y$) that are for transporting the trolley TR to the desired target position ($X_f$,$Y_f$), which is entered from the control panel or from some other input unit (not shown), in such a manner that the load suspended from the trolley TR will swing as little as possible.

The command velocity generating unit 50 generates a command velocity at a fixed generation period $T_{set}$. The current processing cycle is represented by k.

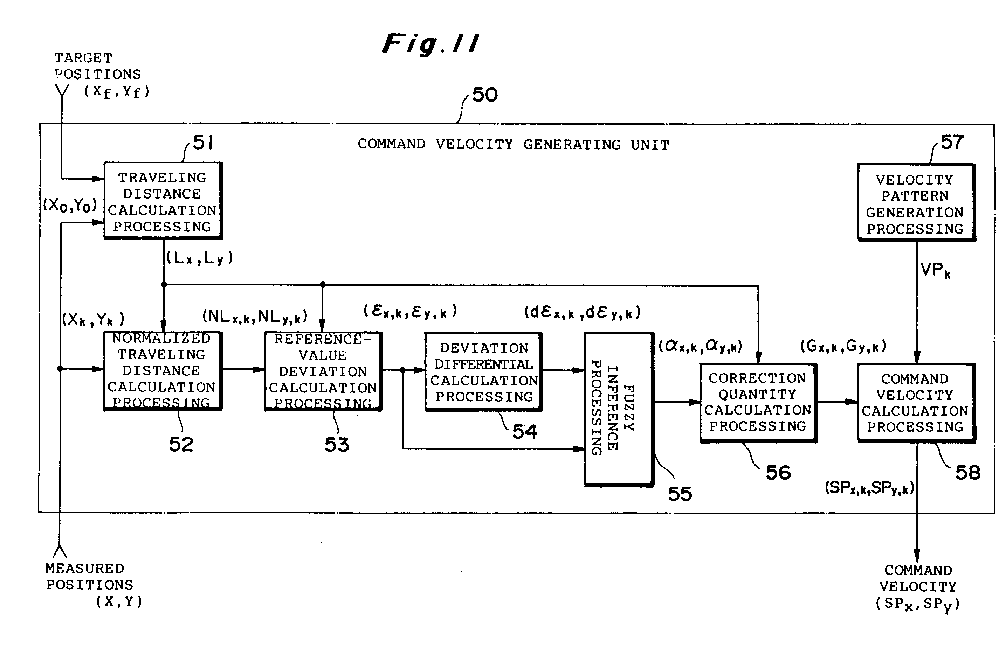

Fig. 11 is a functional block diagram illustrating the detailed architecture of the command velocity generating unit 50. The command velocity generating unit 50 is implemented by a computer and software run by this computer, all components thereof may be implemented by hardware. The command velocity generating unit 50 can be in part be implemented by software and in part by hardware.

The command velocity generating unit 50 has traveling distance calculation processing 51, normalized traveling distance calculation processing 52, reference-value deviation calculation processing 53, deviation differential calculation processing 54, fuzzy inference processing 55, correction quantity calculation processing 56, velocity pattern generation processing 57 and command velocity calculation processing 58. Each process is a program routine.

When the desired target position ($X_f$,$Y_f$) is entered into the traveling distance calculation processing 51 by the operator, the measured positions (X,Y) from the encoders $E_x$, $E_y$ are captured as the initial position ($X_0$,$Y_0$) of the trolley TR by the traveling distance calculation processing 51 via the motor control units 41, 42. On the basis of this initial position and target position, maximum traveling distance is calculated along each of the X and Y axes by the traveling distance calculation processing 51. Maximum traveling distances ($L_x$,$L_y$) are calculated in accordance with the following equations:

$$L_x = X_f - X_0 \qquad (9)$$

$$L_y = Y_f - Y_0 \qquad (10)$$

The maximum traveling distances ($L_x$,$L_y$) calculated by the traveling distance calculation processing 51 are applied to the normalized traveling distance calculation processing 52, reference-value deviation calculation processing 53 and correction quantity calculation processing 56.

After the target positions have been entered, control starts and the measured positions (X,Y) are captured by the traveling distance calculation processing 52 as the measured positions ($X_k$,$Y_k$) at the generation period $T_{set}$. On the basis of the measured positions ($X_k$,$Y_k$) captured, the distances from the initial position

($X_0$,$Y_0$) are normalized by the maximum traveling distances ($L_x$,$L_y$) provided by the traveling distance calculation processing 51, and normalized distances ($NL_{x,y}$, $NL_{y,k}$) are calculated by the normalized traveling distance calculation processing 52. The normalized distances ($NL_{x,y}$, $NL_{y,k}$) are calculated in accordance with the following equations:

$$NL_{x,k} = \frac{X_k - X_0}{L_x} \qquad (11)$$

$$NL_{y,k} = \frac{Y_k - Y_0}{L_y} \qquad (12)$$

The normalized distances ($NL_x$, $NL_y$) represent to what extent the trolley TR has attained the target position (i.e., the target attainment ratio). Even if the traveling distance differs in each direction, whether the trolley TR is near to or far from the target position can be expressed by 0 ~ 1 based upon the normalized distance. The closer the normalized distance is to 1, the closer the trolley is to the target position.

The normalized distances ($NL_{x,y}$, $NL_{y,k}$) calculated by the normalized traveling distance calculation processing 52 are applied to the reference-value deviation calculation processing 53.

In the reference-value deviation calculation processing 53, a reference value $NLB_k$ is decided based upon the maximum traveling distances ($L_x$, $L_y$) and deviations ($\varepsilon_{x,k}$, $\varepsilon_{y,k}$) of the normalized distances ($NL_{x,y}$, $NL_{y,k}$) with respect to this reference value $NLB_k$ are calculated.

The reference value $NLB_k$ takes on either of the following values depending upon the size of the maximum traveling distances ($L_x$, $L_y$):

$$① \qquad NLB_k = NL_{x,k} \qquad (13)$$

when $L_x \gtrsim L_y$ holds

$$② \qquad NLB_k = NL_{y,k} \qquad (14)$$

when $L_x < L_y$ holds

Since the target position is reached faster along the Y axis than along the X axis when maximum traveling distance $L_x > L_y$ holds, as shown in Fig. 10c, the reference value is decided in such a manner that movement along the X axis is performed at the maximum velocity and movement along the Y axis is performed at a velocity smaller than the maximum velocity so that the target position will be attained on the Y axis at the same time that it is attained on the X axis.

In a case where maximum velocities of the main girder MB and trolley TR are different, the reference value should be decided so as to take maximum velocity into account in addition to maximum traveling distance.

The reference-value deviations ($\varepsilon_{x,k}$, $\varepsilon_{y,k}$) are calcu-

lated in accordance with the following equations based upon the reference value NLBk and normalized distances ($NL_{x,y}$, $NL_{y,k}$):

$$\varepsilon_{x,k} = NLB_k - NL_{x,k} \qquad (15)$$

$$\varepsilon_{y,k} = NLB_k - NL_{y,k} \qquad (16)$$

By way of example, when maximum traveling distance $L_x > L_y$ holds, $NLB_k = NL_{x,k}$ holds according to Equation (13). The reference-value deviation, therefore, is $\varepsilon_{x,k} = 0$ from Equation (15). Accordingly, the reference-value deviation need be calculated only in the direction other than the direction selected as the reference value $NLB_k$ in dependence upon the size of the maximum traveling distances ($L_x$, $L_y$).

The reference-value deviations ($\varepsilon_{x,k}$, $\varepsilon_{y,k}$) calculated by the reference-value deviation calculation processing 53 are applied to the deviation differential calculation processing 54 and fuzzy inference processing 55.

Deviation differentials ($d\varepsilon_{x,k}$, $d\varepsilon_{y,k}$) are calculated by the deviation differential calculation processing 54 based upon the current reference-value deviations ($\varepsilon_{x,k}$, $\varepsilon_{y,k}$) and the preceding reference-value deviations ($\varepsilon_{x,k-1}$, $\varepsilon_{y,k-1}$). The deviation differentials ($d\varepsilon_{x,k}$, $d\varepsilon_{y,k}$) are calculated in accordance with the following equations:

$$d\varepsilon_{x,k} = \frac{\varepsilon_{x,k} - \varepsilon_{x,k-1}}{T_{set}} \qquad (17)$$

$$d\varepsilon_{y,k} = \frac{\varepsilon_{y,k} - \varepsilon_{y,k-1}}{T_{set}} \qquad (18)$$

The deviation differentials ($d\varepsilon_{x,k}$, $d\varepsilon_{y,k}$) differentiated by the deviation differential calculation processing 54 with respect to time are applied to the fuzzy inference processing 55.

In the fuzzy inference processing 55, correction gains ($\alpha_{x,k}$, $\alpha_{y,k}$) are calculated in accordance with correction gain inferencing knowledge with regard to the reference-value deviations ($\varepsilon_{x,k}$, $\varepsilon_{y,k}$) and deviation differentials ($d\varepsilon_{x,k}$, $d\varepsilon_{y,k}$). The correction gain inferencing knowledge used is similar to that shown in Figs. 5a ~ 5d.

The correction gains ($\alpha_{x,k}$, $\alpha_{y,k}$) calculated by the fuzzy inference processing 55 are applied to the correction quantity calculation processing 56.

In the correction quantity calculation processing 56, correction quantities ($G_{x,k}$, $G_{y,k}$) of command velocity are calculated in accordance with the following equations based upon the maximum traveling distances ($L_x$, $L_y$) provided by the traveling distance calculation processing 51 and the correction gains ($\alpha_{x,k}$, $\alpha_{y,k}$) calculated by the fuzzy inference processing 55:

$$① \qquad G_{x,k} = 1 \qquad (19)$$

$$G_{y,k} = (1 + \alpha_{y,k}) \cdot \frac{L_y}{L_x} \qquad (20)$$

when $L_x \geqq L_y$ holds

$$② \qquad G_{x,k} = (1 + \alpha_{x,k}) \cdot \frac{L_x}{L_y} \qquad (21)$$

$$G_{y,k} = 1 \qquad (22)$$

when $L_x < L_y$ holds

The correction quantities ($G_{x,k}$, $G_{y,k}$) calculated by the correction quantity calculation processing 56 are applied to the command velocity calculation processing 58.

A velocity pattern $VP_k$ to be applied to the motor control units 41, 42 is generated by the velocity pattern generation processing 57 and then applied to the command velocity calculation processing 58. This velocity pattern is generated based upon the target position ($X_f$, $Y_f$) and measured position (X,Y). This is a pattern generated in such a manner that the hook FK will not swing at the time of acceleration and deceleration and will travel at the maximum velocity $V_{SS}$ at the time of constant-velocity travel.

In the command velocity calculation processing 58, the command velocities ($SP_{x,k}$, $SP_{y,k}$) are calculated in accordance with the following equations based upon the velocity pattern $VP_k$ and correction quantities ($G_{x,k}$, $G_{y,k}$):

$$SP_{x,k} = VP_k \cdot G_{x,k} \qquad (23)$$

$$SP_{y,k} = VP_k \cdot G_{y,k} \qquad (24)$$

These command velocities ($SP_{x,k}$, $SP_{y,k}$) are supplied from the command velocity generating unit 50 to the motor control units 41, 42 as command velocities ($SP_x$, $SP_y$). The motor control units 41, 42 control the motors $M_x$, $M_y$ respectively, based upon the command velocities ($SP_{x,k}$, $SP_{y,k}$).

The command velocities ($SP_{x,k}$, $SP_{y,k}$) are thus generated.

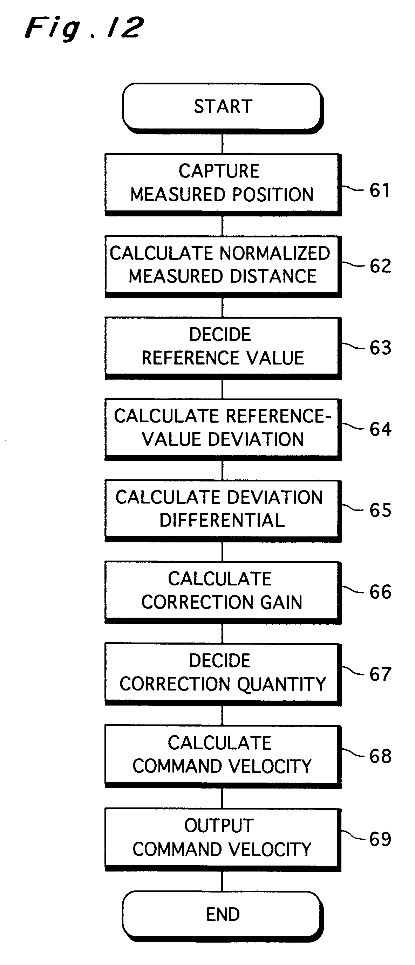

Fig. 12 is a flowchart illustrating processing for generating command velocity in the command velocity generating unit 50. It is assumed here that the current generation of target temperatures is processing cycle k.

Before the start of position control, the target position ($X_f$, $Y_f$) and the initial position ($X_0$, $Y_0$) provided by the encoders $E_x$, $E_y$ via the motor control units 41, 42 are captured by the traveling distance calculation processing 51, which calculates the maximum traveling distances ($L_x$, $L_y$).

The command velocity generating unit 50 accepts the measured position ($X_k$, $Y_k$), which is provided by the encoders $E_x$, $E_y$ via the motor control units 41, 42, at the

constant generation period $T_{set}$ (step 61).

The normalized traveling distance calculation processing 52 calculates traveling distances from the initial position $(X_0, Y_0)$ based upon the measured position $(X_k, Y_k)$ captured, normalizes these traveling distances by the maximum traveling distances $(L_x, L_y)$ and calculates the normalized distances $(NL_x, NL_y)$ (step 62).

The reference-value deviation calculation processing 53 decides the reference value $NLB_k$ based upon the normalized distances $(NL_x, NL_y)$ (step 63).

The reference-value deviation calculation processing 53 calculates the reference-value deviations $(\varepsilon_{x,k}, \varepsilon_{y,k})$ between the normalized distances $(NL_x, NL_y)$ and reference value $NLB_k$ (step 64).

The deviation differential calculation processing 54 calculates the deviation differentials $(d\varepsilon_{x,k}, d\varepsilon_{y,k})$ based upon the current reference-value deviations $(\varepsilon_{x,k}, \varepsilon_{y,k})$ and the preceding reference-value deviations $(\varepsilon_{x,k-1}, \varepsilon_{y,k-1})$ (step 65).

Using the correction gain inferencing knowledge, the fuzzy inference processing 55 calculates the correction gains $(\alpha_{x,k}, \alpha_{y,k})$ based upon the reference-value deviations $(\varepsilon_{x,k}, \varepsilon_{y,k})$ and deviation differentials $(d\varepsilon_{x,k}, d\varepsilon_{y,k})$ (step 66).

The correction quantity calculation processing 25 decides the correction quantities $(G_{x,k}, G_{y,k})$ based upon the velocity pattern $VP_x$ generated by the velocity pattern generation processing 57 and the correction gains $(\alpha_{x,k}, \alpha_{y,k})$ (step 67).

The command velocity calculation processing 58 revises the velocity pattern VPk using the correction quantities $(G_{x,k}, G_{y,k})$, thereby calculating the command velocity $(SP_{x,k}, SP_{y,k})$ (step 68).

The command velocity generating unit 20 outputs the command velocities $(SP_{x,k}, SP_{y,k})$ to the motor control units 41, 42 as the command velocities $(SP_{x,k}, SP_{y,k})$, respectively (step 69).

The motor control units 41, 42 control the motors using the command velocities $(SP_x, SP_y)$ generated by the command velocity generating unit 50.

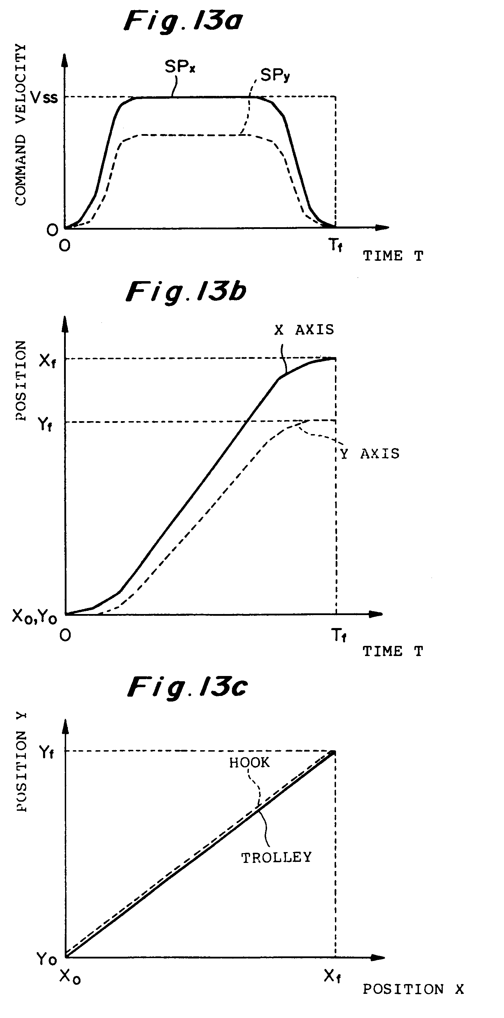

Fig. 13a is a graph showing the command velocities $(SP_x, SP_y)$ generated by the command velocity generating unit 20, Fig. 13b is a graph illustrating the positions of the trolley TR and hook FK when controlled by the command velocities shown in Fig. 13a, and Fig. 13c is a graph illustrating the positions of the trolley TR and hook FK when controlled by the command velocities shown in Fig. 13a. Figs. 13a ~ 13b corresponding to the conventional control illustrated in Figs. 10a ~ 10b, respectively.

As shown in Fig. 13a, the command velocities are such that the command velocity $SP_y$ along the Y axis becomes small, in conformity with traveling distance, with respect to the command velocity $SP_x$ along the X axis. As a result, though the traveling velocity of the hook FK changes at position $(X_1, Y_f)$ with the conventional control shown in Fig. 10b, the hook FK moves substantially linearly from the initial position $(X_0, Y_0)$ to the target position $(X_f, Y_f)$, as will be appreciated from Fig. 13b. Owing to the fact that the main girder MB and trolley TR thus reach their target positions simultaneously, there is no change in the traveling direction of the hook FK and no Coriolis force is produced. Accordingly, swinging of the hook FK is minimized. Since swinging of the hook FK is kept small, the suspended load can be raised and lowered without waiting for a diminution in the swinging of the hook FK (the suspended load). As a result, the time required for this operation is shortened. Further, since the swinging of the suspended load is small, it is no longer necessary to provide a safety zone outside the work area.

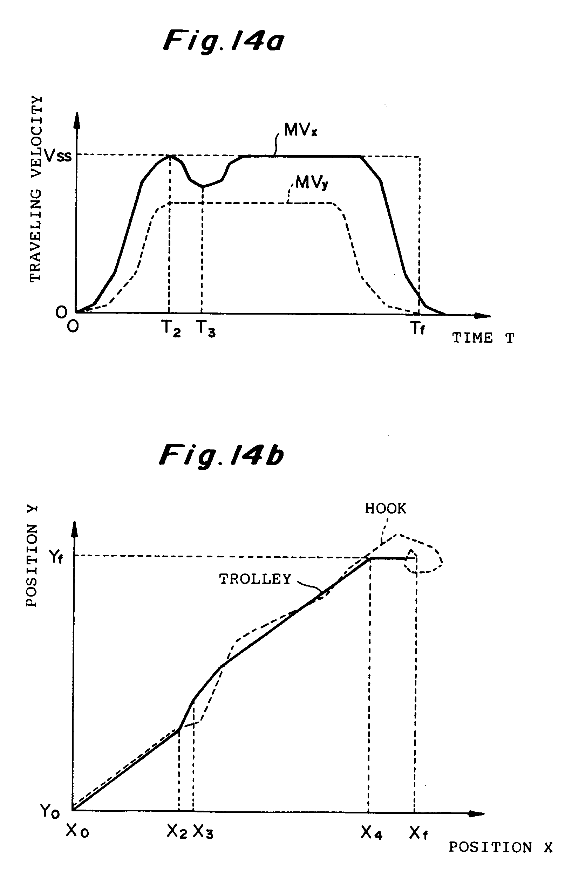

Figs. 14a and 14b are graphs showing the results of control based upon conventional control in which maximum velocity is altered in dependence upon maximum traveling distance in such a manner that the main girder MB and trolley TR attain their respective target positions $(X_f, Y_f)$ simultaneously. These graphs are for a case where the drive wheels of the main girder MB have developed slip at positions $X_2 \sim X_3$. Fig. 14a illustrates the traveling velocity $MV_x$ of the main girder MB and the traveling velocity $MV_y$ of the trolley TR, and Fig. 14b shows the trajectories of the trolley TR and hook FK. The traveling direction of the hook FK changes owing to slipping of the drive wheels of the main girder MB (X direction), as a result of which Coriolis force acts upon the hook FK and causes the hook FK to swing. Owing to such slipping, the arrival of the trolley TR at the target position is delayed and the motion vector of the hook FK changes again at the positions $(X_3, Y_f)$ (time $T_3$), thereby causing even greater swinging of the hook FK.

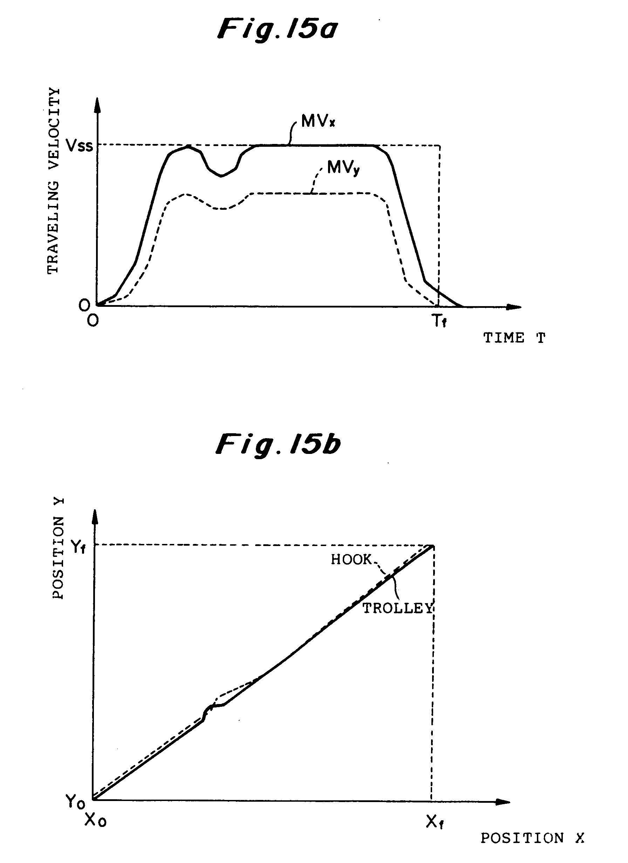

Figs. 15a and 15b are graphs for when control is performed by command velocities generated by the command velocity generating unit 50 at such time that slipping has occurred in a manner similar to that in conventional control described above. When the drive wheels of the main girder MB slip and traveling velocity $MV_x$ in the X direction becomes small, the command velocity $SP_y$ in the Y direction is changed to a small value in dependence upon the size of the traveling velocity, as shown in Fig. 15a. As a result, a change in the traveling direction of the trolley TR (hook FK) can be kept small.

Accordingly, swinging of the hook FK can be made small, as illustrated in Fig. 15b.

**Claims**

1. A control system comprising a plurality of spatially existing heaters, a plurality of temperature sensors provided so as to correspond to respective ones of said plurality of heaters for measuring the temperatures of controlled objects, a target temperature generating unit for generating a revised target temperature for each heater based upon a given final target temperature, and a controller for calculating manipulated variables in such a manner that the measured temperatures measured by said plurality of temperature sensors will approach respective ones of the revised target temperatures generated by said target temperature generating unit, and applying these manipulated variables to respective ones of said plurality of heaters; wherein said target temperature generating unit has:

reference-value deviation calculating means for calculating normalized measured temperatures obtained by normalizing the measured temperatures, which have been measured by said plurality of temperature sensors, by respective ones of corresponding final target temperatures, deciding a reference value based upon these normalized measured temperatures, and calculating reference-value deviations between each normalized measured temperature and said reference value;

deviation differential-value calculating means for differentiating, with respect to time, the reference-value deviations calculated by said reference-value deviation calculating means, thereby calculating respective deviation differential values;

correction gain calculating means for calculating respective correction gains, in such a manner that all normalized measured temperatures take on the same value, based upon the reference-value deviations calculated by said reference-value deviation calculating means and the deviation differential values calculated by said deviation differential-value calculating means;

normalized deviation calculating means for calculating respective normalized deviations obtained by normalizing, by said final target temperatures, deviations between the measured temperatures measured by said plurality of temperature sensors and respective ones of the corresponding final target temperatures;

settling degree calculating means for calculating respective degrees of settling based upon the normalized deviations calculated by said normalized deviation calculating means;

correction quantity calculating means for calculating respective correction quantities based upon the correction gains calculated by said correction gain calculating means, the degrees of settling calculated by said settling degree calculating means, a predetermined start-up gain and a predetermined settling gain; and

target temperature calculating means for calculating respective ones of said revised target temperatures by revising said final target temperatures using the correction quantities calculated by said correction quantity calculating means.

2. A control system comprising a plurality of spatially existing actuators for driving controlled objects, a plurality of sensors provided so as to correspond to respective ones of said plurality of actuators for measuring controlled variables of said controlled objects, and a controller for calculating manipulated variables in such a manner that the controlled variables measured by said plurality of sensors will approach respective ones of given target values, and applying these manipulated variables to respective ones of said plurality of actuators, characterized by having:

a target value generating unit for calculating normalized controlled variables obtained by normalizing the controlled variables, which have been measured by said plurality of sensors, by respective ones of given final target values, deciding a reference quantity based upon these normalized controlled variables, calculating reference-quantity deviations between each normalized controlled variable and said reference quantity, calculating respective ones of said target values by revising said final target values based upon the reference-quantity deviations in such a manner that all normalized controlled variables take on the same value, and applying these target values to said controller.

3. A control system according to claim 2, wherein said target value generating unit has:

reference-quantity deviation calculating means for calculating said normalized controlled variables obtained by normalizing the controlled variables, which have been measured by said plurality of sensors, by respective ones of corresponding final target values, deciding said reference quantity based upon these normalized controlled variables, and calculating said reference-quantity deviations between each normalized controlled variable and said reference quantity; and

target value calculating means for calculating respective ones of said target values by revising said final target values, in such a manner that all normalized controlled variables take on the same value, based upon the reference-quantity deviations calculated by said reference-quantity deviation calculating means.

4. A control system according to claim 2, wherein said target value generating unit has:

reference-quantity deviation calculating means for calculating said normalized controlled variables obtained by normalizing the controlled variables, which have been measured by said plurality of sensors, by respective ones of corresponding final target values, deciding said reference quantity based upon these normalized controlled variables, and calculating said reference-quantity deviations between each normalized controlled variable and said reference quantity;

deviation differential-value calculating means for differentiating, with respect to time, the reference-quantity deviations calculated by said reference-quantity deviation calculating means, thereby calculating respective deviation differential values; and

target value calculating means for calculating respective ones of the target values by revising said final target values, in such a manner that all normalized controlled variables take on the same value, based upon the reference-quantity deviations calculated by said reference-quantity deviation calculating means and the deviation differential values calculated by said deviation differential-value calculating means.

5. A control system according to claim 2, wherein said target value generating unit has:

reference-quantity deviation calculating means for calculating said normalized controlled variables obtained by normalizing the controlled variables, which have been measured by said plurality of sensors, by respective ones of corresponding final target values, deciding said reference quantity based upon these normalized controlled variables, and calculating said reference-quantity deviations between each normalized controlled variable and said reference quantity;

deviation differential-value calculating means for differentiating, with respect to time, the reference-quantity deviations calculated by said reference-quantity deviation calculating means, thereby calculating respective deviation differential values;

correction gain calculating means for calculating respective correction gains based upon the reference-quantity deviations calculated by said reference-quantity deviation calculating means and the deviation differential values calculated by said deviation differential-value calculating means;

normalized deviation calculating means for calculating respective normalized deviations obtained by normalizing, by said final target values, deviations between the controlled variables measured by said plurality of sensors and respective ones of the corresponding final target values;

settling degree calculating means for calculating respective degrees of settling based upon the normalized deviations calculated by said normalized deviation calculating means; and

target value calculating means for calculating respective ones of said target values by revising said final target values, in such manner that all normalized controlled variables take on the same value, based upon the correction gains calculated by said correction gain calculating means and the degrees of settling calculated by said settling degree calculating means.

6. A control system according to claim 2, wherein said target value generating unit has:

reference-quantity deviation calculating means for calculating said normalized controlled variables obtained by normalizing the controlled variables, which have been measured by said plurality of sensors, by respective ones of corresponding final target values, deciding said reference quantity based upon these normalized controlled variables, and calculating said reference-quantity deviations between each normalized controlled variable and said reference quantity;

deviation differential-value calculating means for differentiating, with respect to time, the reference-quantity deviations calculated by said reference-quantity deviation calculating means, thereby calculating respective deviation differential values;

correction gain calculating means for calculating respective correction gains based upon the reference-quantity deviations calculated by said reference-quantity deviation calculating means and the deviation differential values calculated by said deviation differential-value calculating means;

normalized deviation calculating means for calculating respective normalized deviations obtained by normalizing, by said final target values, deviations between the controlled variables measured by said plurality of sensors and respective ones of the corresponding final target values;

settling degree calculating means for calculating respective degrees of settling based upon the normalized deviations calculated by said normalized deviation calculating means;

correction quantity calculating means for calculating respective correction quantities based upon the correction gains calculated by said correction gain calculating means, the degrees of settling calculated by said settling degree calculating means, a predetermined start-up gain and a predetermined settling gain; and

target value calculating means for calculating respective ones of said target values by revising said final target values using the correction quantities calculated by said correction quantity calculating means.

7. A control system according to any one of claims 2 through 6, wherein said actuators are heaters and said sensors are temperature sensors.

8. A control system according to any one of claims 1 through 7, wherein temperature control of a mold forming machine is performed.

9. A control method comprising providing a plurality of spatially existing heaters, a plurality of temperature sensors provided so as to correspond to respective ones of said plurality of heaters for measuring the temperature of controlled objects, and a controller for calculating manipulated variables in such a manner that the measured temperatures measured by said plurality of temperature sensors will approach respective ones of given revised target temperatures, and applying these manipulated variables to respective ones of said plurality of heaters;

    calculating normalized measured temperatures obtained by normalizing the measured temperatures, which have been measured by said plurality of temperature sensors, by respective ones of corresponding final target temperatures, deciding a reference value based upon these normalized measured temperatures and calculating reference-value deviations between each normalized measured temperature and said reference value;

    differentiating, with respect to time, the calculated reference-value deviations, thereby calculating respective deviation differential values; calculating respective correction gains in such a manner that all normalized measured temperatures take on the same value based upon the calculated reference-value deviations and the calculated deviation differential values;

    calculating respective normalized deviations obtained by normalizing, by said final target temperatures, deviations between the measured temperatures measured by said plurality of temperature sensors and respective ones of the corresponding final target temperatures;

    calculating respective degrees of settling based upon the calculated normalized deviations;

    calculating respective correction quantities based upon the calculated correction gains, the calculated degrees of settling, a predetermined start-up gain and a predetermined settling gain; and

    calculating respective ones of said revised target temperatures by revising said final target temperatures using the calculated correction quantities.

10. A control method comprising providing a plurality of spatially existing actuators for driving controlled objects, a plurality of sensors provided so as to correspond to respective ones of said plurality of actuators for measuring controlled variables of said controlled objects, and a controller for calculating manipulated variables in such a manner that the controlled variables measured by said plurality of sensors will approach respective ones of given target values, and applying these manipulated variables to respective ones of said plurality of actuators;

    calculating normalized controlled variables obtained by normalizing the controlled variables, which have been measured by said plurality of sensors, by respective ones of given final target values, deciding a reference quantity based upon these normalized controlled variables, calculating reference-quantity deviations between each normalized controlled variable and said reference quantity, calculating respective ones of said target values by revising said final target values based upon the reference-quantity deviations in such a manner that all normalized controlled variables take on the same value, and applying these target values to said controller.

11. A control method according to claim 10, wherein said actuators are heaters and said sensors are temperature sensors.

12. A control method according to any one of claims 9 through 11, wherein temperature control of a mold forming machine is performed.

13. A control system comprising a plurality of drive units for driving controlled objects, a plurality of position sensors provided so as to correspond to respective ones of said plurality of drive units for measuring the positions of said controlled objects, a command velocity generating unit for generating a revised command velocity for each drive unit based upon a given final target position and a predetermined command velocity, and a controller for calculating manipulated variables in such a manner that velocities derived based upon the positions measured by said plurality of position sensors will become respective ones of the revised command velocities generated by the command velocity generating unit, and applying these manipulated variables to respective ones of said plurality of drive units, wherein said command velocity generating unit has:

    maximum distance calculating means for calculating respective maximum distances prior to start of control or at start of control based upon initial positions measured by said plurality of position sensors and said final target positions; reference-value deviation calculating means for calculating normalized distances obtained by normalizing distances between said initial positions and measured positions measured by said plurality of position sensors by respective ones of corresponding maximum distances after start of control, deciding a reference value based upon these normalized distances, and calculating reference-value deviations between each normalized distance and the reference value;

deviation differential-value calculating means for differentiating, with respect to time, the reference-value deviations calculated by said reference-value deviation calculating means, thereby calculating respective deviation differential values;

correction gain calculating means for calculating respective correction gains, in such a manner that all normalized distances take on the same value, based upon the reference-value deviations calculated by said reference-value deviation calculating means and the deviation differential values calculated by said deviation differential-value calculating means; and

command velocity calculating means for calculating said revised command velocities by revising said command velocities based upon the correction gains calculated by said correction gain calculating means.

14. A control system comprising a plurality of actuators for driving controlled objects, a plurality of first and second sensors provided so as to correspond to respective ones of said plurality of actuators for measuring first and second controlled variables of said controlled objects, a secondary target value generating unit for generating, for each actuator, a revised secondary target value to be applied to a controller in order to so arrange it that the first controlled variables measured by said first sensors will attain given final target values, and a controller for calculating manipulated variables in such a manner that the second controlled variables measured by said plurality of second sensors will approach respective ones of revised secondary target values generated by said secondary target value generating unit, and applying these manipulated variables to respective ones of said plurality of actuators;

said secondary target value generating unit calculating respective maximum amounts of change prior to start of control or at start of control based upon initial values measured by said plurality of first sensors and said final target values, calculating normalized amounts of change obtained by normalizing amounts of change between said initial values and the first controlled variables measured by said plurality of first sensors by respective ones of corresponding maximum amounts of change after start of control, deciding a reference quantity based upon these normalized amounts of change, calculating reference-quantity deviations between each normalized amount of change and said reference quantity, and generating said revised secondary target values by revising said secondary target values based upon each of the reference-quantity deviation values in such a manner that all normalized amounts of change take on the same value.

15. A control system according to claim 4, wherein said first sensors and second sensors are the same and said second controlled variables are calculated based upon the first controlled variables.

16. A control system according to claim 14 or 15, wherein said first controlled variables are positions and said second controlled variables are velocities.

17. A control system according to any one of claims 14 through 16, wherein said secondary target value generating unit has:

amount-of-change calculating means for calculating respective ones of said maximum amounts of change prior to start of control or at start of control based upon said initial values measured by said plurality of first sensors and said final target values;

reference-quantity deviation calculating means for calculating said normalized amounts of change obtained by normalizing amounts of change between said initial values and the first controlled variables measured by said plurality of first sensors by respective ones of corresponding maximum amounts of change after start of control, deciding said reference quantity based upon these normalized amounts of change, and calculating said reference-quantity deviations between each normalized amount of change and said reference quantity; and

target value calculating means for calculating respective ones of said revised secondary target values by revising said secondary target values, based upon the reference-quantity deviations calculated by said reference-quantity deviation calculating means, in such a manner that all normalized amounts of change take on the same value.

18. A control system according to any one of claims 14 through 16, wherein said secondary target value generating unit has:

amount-of-change calculating means for calculating respective ones of said maximum amounts of change prior to start of control or at start of control based upon said initial values measured by said plurality of first sensors and said final target values;

reference-quantity deviation calculating means for calculating said normalized amounts of change obtained by normalizing amounts of change between said initial values and the first controlled variables measured by said plurality of first sensors by respective ones of corresponding maximum amounts of change after start of control, deciding said reference quantity based upon these normalized amounts of change, and calculating said reference-quantity deviations between each normalized amount of change and said reference quantity; deviation differential-value calculating means for differentiating, with respect to time, the reference-quantity deviations calculated by said reference-quantity deviation calculating means, thereby calculating respective deviation differential values,; and

target value calculating means for calculating respective ones of said revised secondary target values by revising said secondary target values, in such a manner that all normalized amounts of change take on the same value, based upon the reference-quantity deviations calculated by said reference-quantity deviation calculating means and the deviation differential values calculated by said deviation differential-value calculating means.

19. A control system according to any of claims 14 through 16, wherein said secondary target value generating unit has:

    amount-of-change calculating means for calculating respective ones of said maximum amounts of change prior to start of control or at start of control based upon said initial values measured by said plurality of first sensors and said final target values;

    reference-quantity deviation calculating means for calculating said normalized amounts of change obtained by normalizing amounts of change between said initial values and the first controlled variables measured by said plurality of first sensors by respective ones of corresponding maximum amounts of change after start of control, deciding said reference quantity based upon these normalized amounts of change, and calculating said reference-quantity deviations between each normalized amount of change and said reference quantity; deviation differential-value calculating means for differentiating, with respect to time, the reference-quantity deviations calculated by said reference-quantity deviation calculating means, thereby calculating respective deviation differential values; and

correction gain calculating means for calculating respective correction gains, based upon the reference-quantity deviations calculated by said reference-quantity deviation calculating means and the deviation differential values calculated by said deviation differential-value calculating means, in such a manner that all normalized amounts of change take on the same value; and

target value calculating means for calculating respective ones of said revised target values by revising said secondary target values based upon the correction gains calculated by said correction gain calculating means.

20. A control system according to any one of claims 14 through 19, wherein said actuators are drive units and said first sensors are position sensors.

21. A control system according to any one of claims 13 through 20, wherein position control of an overhead traveling crane is performed.

22. A control method comprising providing a plurality of drive units for driving controlled objects, a plurality of position sensors provided so as to correspond to respective ones of said plurality of drive units for measuring the positions of said controlled objects, and a controller for calculating manipulated variables in such a manner that velocities derived based upon the positions measured by said plurality of position sensors will become respective ones of given revised command velocities, and applying these manipulated variables to respective ones of said plurality of drive units;

    calculating respective maximum distances prior to start of control or at start of control based upon initial positions measured by said plurality of position sensors and final target positions;

    calculating normalized distances obtained by normalizing distances between said initial positions and measured positions measured by said plurality of position sensors by respective ones of corresponding maximum distances after start of control, deciding a reference value based upon these normalized distances and calculating reference-value deviations between each normalized distance and said reference value;

    differentiating, with respect to time, the calculated reference-value deviations, thereby calculating respective deviation differential values; calculating respective correction gains, in such a manner that all normalized distances take on the same value, based upon the calculated reference-value deviations and the calculated deviation differential values; and

calculating said revised command velocities by revising the command velocities based upon the calculated correction gains.

**23.** A control method comprising providing a plurality of actuators for driving controlled objects, a plurality of first and second sensors provided so as to correspond to respective ones of said plurality of actuators for measuring first and second controlled variables of said controlled objects, and a controller for calculating manipulated variables in such a manner that the second controlled variables measured by said plurality of second sensors will approach respective ones of given revised secondary target values and applying these manipulated variables to respective ones of said plurality of actuators;

calculating respective maximum amounts of change prior to start of control or at start of control based upon initial values measured by said plurality of first sensors and said final target values;

calculating normalized amounts of change obtained by normalizing amounts of change between said initial values and the first controlled variables measured by said plurality of first sensors by respective ones of corresponding maximum amounts of change after start of control, deciding a reference quantity based upon these normalized amounts of change, calculating reference-quantity deviations between each normalized amount of change and said reference quantity, and generating said revised secondary target values by revising said secondary target values based upon each of the reference-quantity deviation values in such a manner that all normalized amounts of change take on the same value.

**24.** A control method according to claim 23, wherein said first sensors and second sensors are the same and said second controlled variables are calculated based upon the first controlled variables.

**25.** A control method according to claim 23 or 24, wherein said first controlled variables are positions and said second controlled variables are velocities.

**26.** A control method according to any one of claims 23 through 25, wherein said actuators are drive units and said first sensors are position sensors.

**27.** A control method according to any one of claims 22 through 26, wherein position control of an overhead traveling crane is performed.

**28.** A control system comprising a plurality of actuators for driving controlled objects, a plurality of sensors provided so as to correspond to respective ones of said plurality of actuators for measuring controlled variables of said controlled objects, and a controller for calculating manipulated variables in such a manner that the controlled variables measured by said plurality of sensors will approach respective ones of given target values, and applying these manipulated variables to respective ones of said plurality of actuators, characterized by having:

a target value generating unit for calculating respective target values, based upon the controlled variables measured by said plurality of sensors and given final target values, in such a manner that all controlled variables respond at the same rate, and applying these target values to said controller.

**29.** A control method comprising providing a plurality of actuators for driving controlled objects, a plurality of sensors provided so as to correspond to respective ones of said plurality of actuators for measuring controlled variables of said controlled objects, and a controller for calculating manipulated variables in such a manner that the controlled variables measured by said plurality of sensors will approach respective ones of given target values, and applying these manipulated variables to respective ones of said plurality of actuators; and

calculating respective target values, based upon the controlled variables measured by said plurality of sensors and given final target values, in such a manner that all controlled variables respond at the same rate, and applying these target values to said controller.

*Fig. 1*

CORRECTION GAIN $K_i$
FOR SETTLING TIME

CORRECTION GAIN $K_0$
FOR START-UP TIME

REFERENCE TARGET
TEMPERATURE $BT_{i,j}$

TARGET
TEMPERATURE
GENERATING UNIT

20

TARGET
TEMPERATURE $TT_{i,j}$

MEASURED
TEMPERATURE $MT_{i,j}$

MULTIPOINT
TEMPERATURE
CONTROL UNIT

10

MEASURED
TEMPERATURE $MT_{1,j}$

MANIPULATED
VARIABLE $U_{1,j}$

W

$P_1$

$P_2$

$H_1$

$H_2$

MANIPULATED
VARIABLE $U_{2,j}$

MEASURED
TEMPERATURE $MT_{2,j}$

Fig.2

# *Fig. 3*

# Fig. 4

TARGET TEMPERATURE GENERATING UNIT — 20

REFERENCE-VALUE DEVIATION CALCULATION PROCESSING — 21

DEVIATION DIFFERENTIAL CALCULATION PROCESSING — 22

NORMALIZED DEVIATION CALCULATION PROCESSING — 23

FUZZY INFERENCE PROCESSING — 24

CORRECTION QUANTITY CALCULATION PROCESSING — 25

TARGET TEMPERATURE CALCULATION PROCESSING — 26

$\varepsilon_{i,j,k}$

$d\varepsilon_{i,j,k}$

$e_{i,j,k}$

$\alpha_{i,j,k}$

$\beta_{i,j,k}$

$G_{i,j,k}$

MEASURED TEMPERATURE $MT_{i,j}$

REFERENCE TARGET TEMPERATURE $BT_{i,j}$

CORRECTION GAIN $K_1$ FOR SETTLING TIME

CORRECTION GAIN $K_0$ FOR START-UP TIME

TARGET TEMPERATURE $TT_{i,j}$

29

## Fig.5a

| ε<br>dε | NB | NS | ZR | PS | PB |
|---|---|---|---|---|---|
| NB | NB | NB | NM | NS | ZR |
| NS | NB | NM | NS | ZR | PS |
| ZR | NM | NS | ZR | PS | PM |
| PS | NS | ZR | PS | PM | PB |
| PB | ZR | PS | PM | PB | PB |

## Fig.5b

## Fig.5c

## Fig.5d

## Fig.6a

| e | NS | ZR | PS | PM | PB |
|---|----|----|----|----|----|
| $\beta$ | NS | ZR | PS | PM | PB |

## Fig.6b

## Fig.6c

Fig . 7

```
                    ┌─────────────────┐
                    │      START      │
                    └─────────────────┘
                             │
                    ┌─────────────────┐
                    │ CAPTURE MEASURED│──30
                    │   TEMPERATURE   │
                    └─────────────────┘
```

CALCULATE NORMALIZED
MEASURED TEMPERATURE — 31

DECIDE REFERENCE VALUE — 32

CALCULATE
NORMALIZED DEVIATION — 36

CALCULATE REFERENCE-
VALUE DEVIATION — 33

CALCULATE DEVIATION
DIFFERENTIAL — 34

CALCULATE
DEGREE OF SETTLING — 37

CALCULATE
CORRECTION GAIN — 35

CALCULATE
CORRECTION QUANTITY — 38

CALCULATE
TARGET TEMPERATURE — 39

OUTPUT
TARGET TEMPERATURE — 40

END

Fig.8a

Fig.8b

## *Fig. 9*

## Fig. 10a

COMMAND VELOCITY

SPy   SPx

Vss

O

O   Tl   Tf   TIME T

## Fig. 10b

POSITIONS X, Y

Xf

Yf

Xo,Yo

X

Y

O   Tl   Tf   TIME T

## Fig. 10c

POSITION Y

HOOK

Yf

Ly

TROLLEY

Yo

Xo   Lx   Xl   Xf   POSITION X

## Fig. 11

COMMAND VELOCITY GENERATING UNIT — 50

TARGET POSITIONS $(X_f, Y_f)$

51 — TRAVELING DISTANCE CALCULATION PROCESSING

$(X_o, Y_o)$

$(L_x, L_y)$

57 — VELOCITY PATTERN GENERATION PROCESSING

$VP_k$

$(X_k, Y_k)$

$(NL_{x,k}, NL_{y,k})$

$(\varepsilon_{x,k}, \varepsilon_{y,k})$

$(d\varepsilon_{x,k}, d\varepsilon_{y,k})$

$(\alpha_{x,k}, \alpha_{y,k})$

$(G_{x,k}, G_{y,k})$

52 — NORMALIZED TRAVELING DISTANCE CALCULATION PROCESSING

53 — REFERENCE-VALUE DEVIATION CALCULATION PROCESSING

54 — DEVIATION DIFFERENTIAL CALCULATION PROCESSING

55 — FUZZY INFERENCE PROCESSING

56 — CORRECTION QUANTITY CALCULATION PROCESSING

58 — COMMAND VELOCITY CALCULATION PROCESSING

$(SP_{x,k}, SP_{y,k})$

MEASURED POSITIONS $(X, Y)$

COMMAND VELOCITY $(SP_x, SP_y)$

EP 0 753 802 A1

# Fig . 12

```
           ┌─────────────────┐
           │      START       │
           └─────────────────┘
                     │
           ┌─────────────────┐
           │     CAPTURE      │
           │ MEASURED POSITION│ ── 61
           └─────────────────┘
                     │
           ┌─────────────────┐
           │CALCULATE NORMALIZED│
           │ MEASURED DISTANCE │ ── 62
           └─────────────────┘
                     │
           ┌─────────────────┐
           │     DECIDE       │
           │ REFERENCE VALUE  │ ── 63
           └─────────────────┘
                     │
           ┌─────────────────┐
           │CALCULATE REFERENCE-│
           │ VALUE DEVIATION  │ ── 64
           └─────────────────┘
                     │
           ┌─────────────────┐
           │CALCULATE DEVIATION│
           │  DIFFERENTIAL    │ ── 65
           └─────────────────┘
                     │
           ┌─────────────────┐
           │    CALCULATE     │
           │ CORRECTION GAIN  │ ── 66
           └─────────────────┘
                     │
           ┌─────────────────┐
           │     DECIDE       │
           │CORRECTION QUANTITY│ ── 67
           └─────────────────┘
                     │
           ┌─────────────────┐
           │    CALCULATE     │
           │ COMMAND VELOCITY │ ── 68
           └─────────────────┘
                     │
           ┌─────────────────┐
           │     OUTPUT       │
           │ COMMAND VELOCITY │ ── 69
           └─────────────────┘
                     │
           ┌─────────────────┐
           │       END        │
           └─────────────────┘
```

## Fig. 13a

## Fig. 13b

## Fig. 13c

## *Fig. 14a*

## *Fig. 14b*

## Fig.15a

## Fig.15b

## INTERNATIONAL SEARCH REPORT

| | International application No. |
|---|---|
| | PCT/JP95/00612 |

### A. CLASSIFICATION OF SUBJECT MATTER

Int. Cl$^6$ G05B11/32

According to International Patent Classification (IPC) or to both national classification and IPC

### B. FIELDS SEARCHED

Minimum documentation searched (classification system followed by classification symbols)

Int. Cl$^6$ G05B11/32, G05B13/02, G05B19/407

Documentation searched other than minimum documentation to the extent that such documents are included in the fields searched

Jitsuyo Shinan Koho        1932 - 1995
Kokai Jitsuyo Shinan Koho    1971 - 1995

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP, 61-264407, A (Matsushita Electric Ind. Co., Ltd.), November 22, 1986 (22. 11. 86) | 28, 29 |
| Y | JP, 58-149512, A (Fujitsu Fanuc Co., Ltd.), September 5, 1983 (05. 09. 83) | 28, 29 |
| A | JP, 4-227502, A (Sekisui Chemical Co., Ltd.), August 17, 1992 (17. 08. 92) | 1 - 27 |
| A | JP, 5-96591, A (Sumitomo Heavy Industries, Ltd.), April 20, 1993 (20. 04. 93) | 1 - 27 |
| A | JP, 4-267401A (Yamatake-Honeywell Co., Ltd.), September 24, 1992 (24. 09. 92) | 1 - 27 |
| A | JP, 3-204008, A (SG K.K.), September 5, 1991 (05. 09. 91) | 13 - 27 |
| A | JP, 6-79730, A (NOK K.K.), | 1 - 27 |

☒ Further documents are listed in the continuation of Box C.     ☐ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| June 14, 1995 (14. 06. 95) | July 4, 1995 (04. 07. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)

41

**INTERNATIONAL SEARCH REPORT**

International application No.

PCT/JP95/00612

| C (Continuation). DOCUMENTS CONSIDERED TO BE RELEVANT | | |
|---|---|---|
| Category* | Citation of document, with indication, where appropriate, of the relevant passages | Relevant to claim No. |
| | March 22, 1994 (22. 03. 94) | |

Form PCT/ISA/210 (continuation of second sheet) (July 1992)